(19) Europäisches Patentamt
European Patent Office
Office européen des brevets

(11) EP 2 003 892 A1

(12) **EUROPEAN PATENT APPLICATION**
published in accordance with Art. 153(4) EPC

(43) Date of publication:
**17.12.2008 Bulletin 2008/51**

(51) Int Cl.:
*H04N 7/173* (2006.01)

(21) Application number: **06781963.1**

(22) Date of filing: **28.07.2006**

(86) International application number:
**PCT/JP2006/315053**

(87) International publication number:
**WO 2007/116539 (18.10.2007 Gazette 2007/42)**

(84) Designated Contracting States:
**DE FR GB**

(30) Priority: **30.03.2006 JP 2006096035**

(71) Applicant: **Fujitsu Ltd.**
**Kawasaki-shi, Kanagawa 211-8588 (JP)**

(72) Inventor: **NAKANO, Yasuhiko**
**Kawasaki-shi, Kanagawa 211-8588 (JP)**

(74) Representative: **Weihs, Bruno Konrad**
**HASELTINE LAKE**
**5th Floor, Lincoln House**
**300 High Holborn**
**London WC1V 7JH (GB)**

(54) **DATA TRANSFERRING APPARATUS AND DATA TRANSFERRING METHOD**

(57) The present invention aims at providing an image data transfer device capable of transferring image data in real time with a simple comprisal. The image data transfer device according to the present invention comprises a one-cycle transfer volume calculation unit 33 for calculating both the number of lines of the image data to be transferred in one cycle and the volume of data corresponding to the aforementioned number of lines on the basis of the category of the image data; a buffer unit (28 or 29) capable of storing data in an amount that is equivalent to the aforementioned number of lines of the image data processed by a variable length coding; an invalid data addition unit for calculating the difference between the calculated data volume corresponding to the number of lines and the volume of data stored in the buffer unit (28 or 29), and that also adds invalid data to the data stored in the buffer unit (28 or 29) in an amount that is equivalent to the calculated difference; and a packet generation unit 39 for generating, and transmitting, a packet on the basis of the data to which the invalid data has been added.

FIG. 2

**Description**

**Technical Field**

The present invention relates to a data transfer device transferring data by compressing it.

**Background Art**

Image data is commonly transferred in compressed form using a compression method such as the Moving Picture Experts Group (MPEG) 2, et cetera. When data is transmitted in the MPEG 2 system, the MPEG2-TS format is often used. In this format, the data that is actually transferred is encapsulated within a 188-byte fixed length together with various control data.
When an attempt is made to attain an environment in which a real time performance such as a transmission of a motion image is required, what is required with the MPEG2 method is to store information such as a time stamp for avoiding a temporal synchronization in the header part and to overlap a plurality of streams by inputting metadata such as image data, voice, broadcast program information, and the like, after the header part. This results in complicating a circuit, enlarging the circuit size, and increasing the cost in implementing a system.
As examples, reference patent documents 1 and 2 have disclosed techniques related to a code volume on the MPEG2.

Patent document 1: Laid-Open Japanese Patent Application Publication No. 2001-28753, "Motion image coding device and method for same"
Patent document 2: Laid-Open Japanese Patent Application Publication No. 2001-238215, "Motion image coding device and its method for same"

**Disclosure of Invention**

The problem for the present invention is to provide a data transfer device and a data transfer method capable of transferring data in real time with a simple comprisal.
A first aspect of the present invention is a data transfer device, comprising: a one-cycle transfer volume calculation unit for calculating both the number of units of processing of input data to be transferred in one cycle and the volume of data corresponding to the aforementioned number of units of processing on the basis of the category of the input data; a buffer unit capable of storing data in an amount that is equivalent to the aforementioned number of units of processing of the input data; an invalid data addition unit for calculating the difference between the calculated data volume corresponding to the number of units of processing and the volume of data stored in the buffer unit, and that also adds invalid data in an amount that is equivalent to the calculated difference; and a packet generation unit for generating, and transmitting, a packet on the basis of the data to which the invalid data has been added.
A second aspect of the present invention is an image data transfer device transferring image data by compressing it, comprising: a one-cycle transfer volume calculation unit for calculating both the number of lines of the image data to be transferred in one cycle and the volume of data corresponding to the aforementioned number of lines on the basis of the category of the image data; a buffer unit capable of storing data in an amount that is equivalent to the aforementioned number of lines of the image data processed by a variable length coding; an invalid data addition unit for calculating the difference between the calculated data volume corresponding to the number of lines and the volume of data stored in the buffer unit, and that also adds invalid data by an amount that is equivalent to the calculated difference; and a packet generation unit for generating, and transmitting, a packet on the basis of the data to which the invalid data has been added.
Here, the one-cycle transfer volume calculation unit calculates the number of lines to be transferred in one cycle and the volume of data corresponding to the number of lines, and the invalid data addition unit adds invalid data to the data, stored in the buffer unit, corresponding to the number of lines so that the aforementioned data volume matches the calculated data volume. This configuration makes it possible to make a packet size a fixed length even for data to which a variable length coding has been applied, satisfying the specification of a fixed bit rate required when carrying out an isochronous transfer in a low cost system using, for example, the IEEE 1394 interface, thereby making it possible to transfer image data in real time with a simple comprisal.
A third aspect of the present invention is an image data transfer device transferring image data by compressing it, comprising: a one-cycle transfer volume calculation unit for calculating the number of lines of the image data to be transferred in one cycle, the number of lines to be changed to a fixed length, and the volume of data corresponding to the aforementioned number of lines to be changed to a fixed length; a buffer unit capable of storing data in an amount that is equivalent to the number of lines, of the image data processed by a variable length coding, to be changed to a fixed length; an invalid data addition unit for calculating the difference between the calculated volume of data corresponding to the number of lines to be changed to a fixed length and the volume of data stored in the buffer unit, and that also adds invalid data by an amount that is equivalent to the calculated difference; and a packet generation unit for cutting out and transmitting a packet for each cutout data volume from the data to which the invalid data has been added, starting from the head of the data, in an amount of data that is equivalent to the number of lines of the image data to be transferred in one cycle.

The image data transfer device according to the third aspect is configured to set the number of lines to be made, for example the fixed length being no less than the number of lines of the image data to be transferred in one cycle, making it possible to make the data length of a larger number of lines be a fixed length, thereby enabling an easier monitoring of a coding volume performed by the coding volume monitor unit comprised in a system.

A fourth aspect of the present invention is an image data transfer method for transferring image data by compressing it, comprising: a one-cycle transfer volume calculation step for calculating both the number of lines of the image data to be transferred in one cycle and the volume of data corresponding to the aforementioned number of lines on the basis of the category of the image data; a step for storing, in a buffer unit, data in an amount that is equivalent to the aforementioned number of lines of the image data processed by a variable length coding; an invalid data addition step for calculating the difference between the calculated data volume corresponding to the number of lines and the volume of data stored in the buffer unit, and that also adds invalid data in an amount that is equivalent to the calculated difference; and a step for generating, and transmitting, a packet on the basis of the data to which the invalid data has been added.

According to the present invention, an image data transfer method for transferring image data by compressing it comprises: a one-cycle transfer volume calculation step for calculating the number of lines of the image data to be transferred in one cycle, the number of lines to be changed to a fixed length, and the volume of data corresponding to the aforementioned number of lines to be changed to a fixed length; a step for storing, in a buffer unit, data in an amount that is equivalent to the number of lines, of the image data processed by a variable length coding, to be changed to a fixed length; an invalid data addition step for calculating the difference between the calculated volume of data corresponding to the number of lines to be changed to a fixed length and the volume of data stored in the buffer unit, and that also adds invalid data in an amount that is equivalent to the calculated difference; and a step for cutting out and transmitting a packet for each cutout data volume, the packet being cut out from the data to which the invalid data has been added, starting from the head of the data, in an amount of data that is equivalent to the number of lines of the image data to be transferred in one cycle.

The present invention makes it possible to change the packet size of data, to which a variable length coding is applied, to be a fixed length, satisfying the specification of a fixed bit rate required when carrying out an isochronous transfer and making it possible to transfer data in real time with a simple comprisal.

**Brief Description of Drawings**

Fig. 1 is a diagram showing an on-vehicle transfer system for image data as an exemplary application of the present invention;
Fig. 2 is a block diagram showing the configuration of a data transfer device according to a preferred embodiment of the present invention;
Fig. 3 is a diagram showing the size, transfer rate, compression ratio, and one-cycle transfer volume of image data for each device (i.e., channel);
Fig. 4 is a diagram showing an exemplary modification (part 1) of Fig. 2;
Fig. 5 is an example of a table retained by a one-cycle transfer volume calculation unit;
Fig. 6A is a diagram showing a coding table when pixels are represented in RGB in the case of adopting the Huffman coding as a variable length coding;
Fig. 6B is a diagram showing a coding table when pixels are represented in YUV in the case of adopting the Huffman coding as a variable length coding;
Fig. 7 is a diagram describing an example of making data a fixed length by distributing invalid data within the data;
Fig. 8 is a diagram describing an example of making data a fixed length by adding invalid data at the tail end of the data;
Fig. 9 is a diagram showing the principle of the present invention;
Fig. 10 is a diagram showing an image of data;
Fig. 11 is a diagram showing a packet structure;
Fig. 12 is a block diagram showing the configuration when compression processing is performed;
Fig. 13 is a diagram showing the time chart of a preferred embodiment 7;
Fig. 14 is a diagram showing the process flow of embodiment 7;

Fig. 15 is a diagram showing the time chart of preferred embodiments 8 and 9;

Fig. 16 is a diagram showing the process flow of embodiment 8;

Fig. 17 is a diagram showing the process flow of embodiment 9;

Fig. 18 is a diagram showing the time chart of a preferred embodiment 10;

Fig. 19 is a diagram showing the process flow of embodiment 10;

Fig. 20 is a diagram showing the configuration for an LSI performing transmission and reception;

Fig. 21 is a diagram showing the reception process flow of a preferred embodiment 11;

Fig. 22 is a diagram showing a process flow of the present invention;

Fig. 23 is a diagram showing a process flow of the present invention;

Fig. 24 is a diagram showing an exemplary configuration of a recording medium allowing a computer to read a control program; and

Fig. 25 is a detailed configuration diagram of an isochronous packet.

**Best Mode for Carrying Out the Invention**

The following is a description, in detail, of the preferred embodiment of the present invention with reference to the accompanying drawings.

[Description of the Principle]

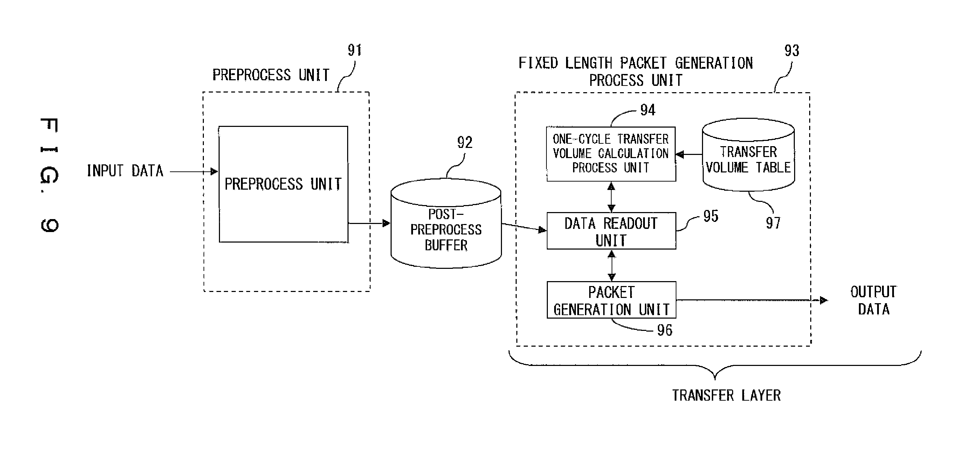

Fig. 9 is a diagram showing the principle of the present invention. A system shown in Fig. 9 comprises a preprocess unit 91, a post-preprocess buffer 92, and a fixed length packet generation process unit 93.

The preprocess unit 91 obtains input data, carries out a prescribed processing, and stores the processed data in the post-preprocess buffer 92. The input data may be variable length data or fixed length data. The preprocess unit 91 carries out the processing on the basis of units (i.e., lines in the case of an image) indicated by a predetermined value (e.g., 4). The "predetermined value" is a value calculated on the basis of a data transfer volume which is calculated by the one-cycle transfer volume calculation process unit 94 of the fixed length packet generation process unit 93 (which is described later) and which can be superimposed on one cycle of one packet of a fixed length that is periodically output, and is a value based on the quotient obtained by the expression:

$$[\text{data transfer volume per cycle}] / [\text{the average data volume}$$
$$\text{per unit (i.e., a line in the case of an image) stored in the}$$
$$\text{post-preprocess buffer (or input data)}]$$

The setting up of the unit for processing at the preprocess unit 91 on the basis of the data volume transferable per cycle makes it possible to enhance the affinity between a process at the preprocess unit and that at a transfer layer.

Note that the predetermined value may use a preset value in place of a number calculated by the one-cycle transfer volume calculation process unit 94.

Further, it is possible to apply a process required for an operated system in the preprocessing so that the preprocess unit 91 may not necessarily be required. In such a case, a data readout unit 95 will directly read input data.

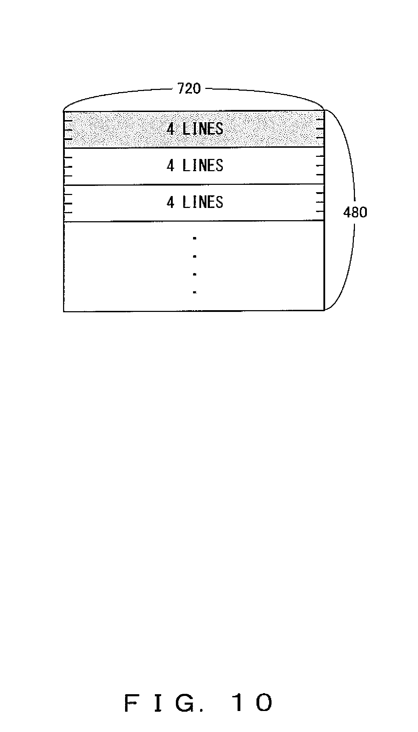

The post-preprocess buffer 92 stores variable length data (i.e., data for each line in the case of an image) that will be divided into certain blocks. For example, where the portion of one line of a 720x480-dot image is defined as one block as shown in Fig. 10, the post-preprocess buffer 92 stores the data for every predetermined value (i.e., the number of blocks; "4" according to this example) in a lump.

The fixed length packet generation process unit 93 comprises a one-cycle transfer volume calculation process unit 94, a data readout unit 95, a packet generation unit 96, and a transfer volume table 97.

The data readout unit 95 obtains the data stored in the post-preprocess buffer 92. The one-cycle transfer volume calculation process unit 94 obtains information (e.g., the device number if there are plural image processing devices (i.e., devices for generating input data)) required when transferring a packet from the transfer volume table 97, and calculates a data volume to be transferred in one cycle (i.e., one packet), which is calculated on the basis of input data, and the above described predetermined value on the basis of the data volume. In this event, these values may also be calculated by receiving an input of data necessary for processing for each occurrence of the processing instead of utilizing the transfer volume table 97. In order to carry out the processing at a high speed, it is desirable to set the category of input data, one-cycle transfer volume in accordance with the category, and the like, in the transfer volume table 97 in advance of the processing.

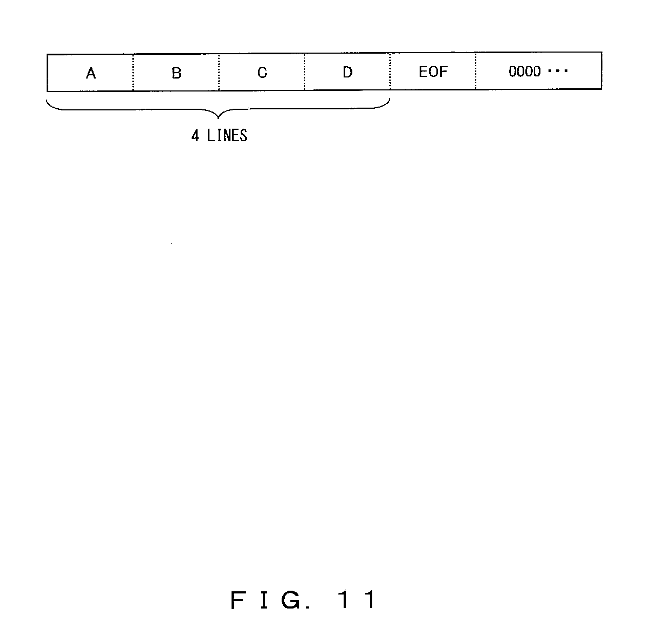

The packet generation unit 96 adds, for example, an End Of File (EOF) line and invalid data (e.g., stuffed "0"s), as shown in Fig. 11, at the end of the data by an amount that is equivalent to four lines (i.e., A through D), as exemplified in Fig. 10, in order to change the data to fixed line data and transfer it.

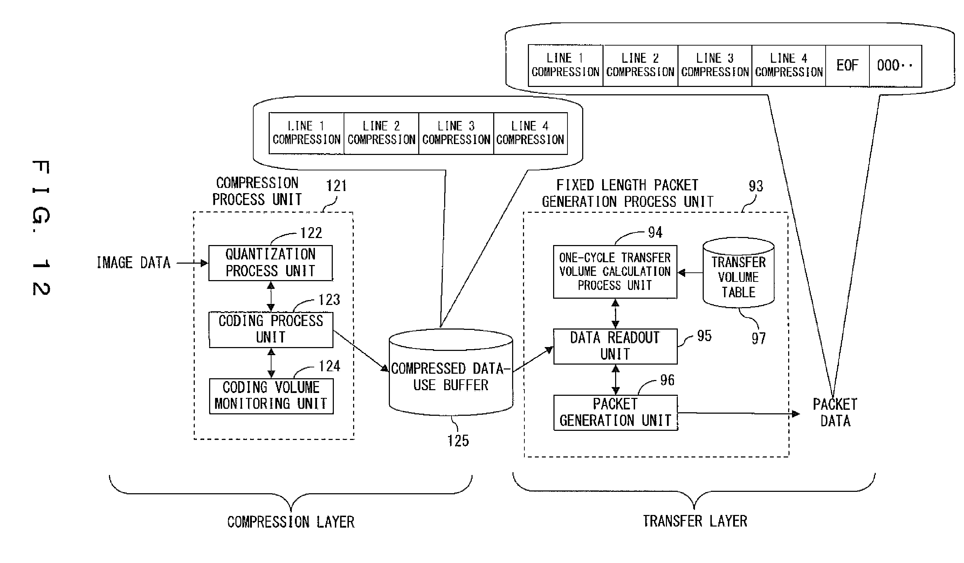

Next, Fig. 12 shows the case of applying the present invention as the data transmission unit of an image processing device and exemplifies the case of replacing the preprocess unit 91 with a compression process unit 121. Image data is input into the compression process unit 121 and compressed data is generated by the quantization process unit 122, coding process unit 123, and coding volume monitoring unit 124. Then, the compressed data is stored in the compressed data-use buffer 125 as shown in Fig. 12 by, for example, the line 1 compressed data through the line 4 compressed data as one block if the above described predetermined value is "4". Then, an EOF and "0"s are added to the line 1 compressed data through the line 4 compressed data and the fixed length packet data is output in a similar manner to the operation in the transfer layer as shown in Fig. 9.

If the present process is implemented by software, the fixed length packet generation process unit 93 and the preprocess unit 91 or compression process unit 121 may be incorporated in the same computer or distributively in different computers.

Note that the target of processing of the present invention may not only be image data but may also, for example, be voice data or the like, since the embodiments put forth below are described as image data as the processing target and therefore a "line" is the unit of processing. If the processing target is voice data, then a piece of data per unit time (e.g., voice data of the portion of one second) can be handled as the unit of processing.

[Embodiment 1]

{Description of Comprisal}

The present invention aims at providing a system (i.e., a data transfer device) accomplishing a requirement in a simple comprisal and at a low cost when real-time performance is required of the transmission of image data.

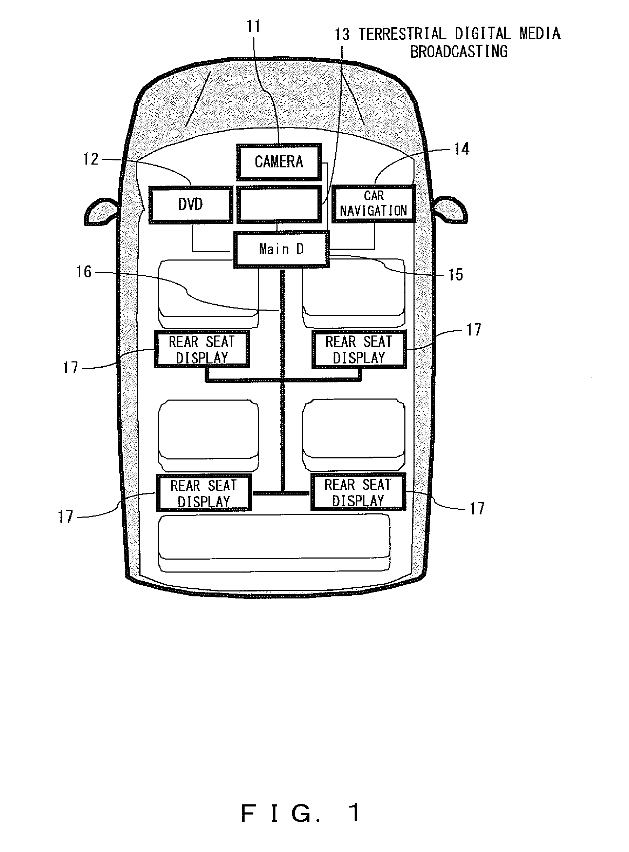

Such a system includes an on-vehicle transfer system for image data as shown in Fig. 1.

Referring to Fig. 1, the camera 11 imports an image at a spot that tends to be a blind spot in the vision of a driver, such as the side of the road and behind the vehicle (an automobile in this case), and outputs the image in a main display device 15 and a display device (s) 17 located in a rear seat connected to the main display device 15 via a bus 16.

A digital versatile disk (DVD) player 12 replays a DVD. A terrestrial digital media broadcast-use tuner 13 tunes to a terrestrial broadcasting wave, converts it into a video image signal, and then outputs image data to the main display device 15 and display device 17 in a rear seat after converting the video signal into the image data. A car navigation device 14 updates the information indicating the current position of the car at prescribed intervals and outputs the information to the main display device 15 and display device 17 in a rear seat.

The present embodiment is described with reference to an IEEE (Institute of Electrical and Electronics Engineers) 1394 interface as an interface capable of implementing a low cost real-time transfer for connecting the image processing devices such as the above described camera 11, DVD player 12, terrestrial digital media broadcast-use tuner 13, car navigation device 14, and the like, to image processing devices such as the main display device 15, rear seat display device 17, and the like.

Here, the IEEE 1394 Standard specifies an isochronous transfer and an asynchronous transfer as transfer processes for a packet. In the isochronous transfer, priority is placed on image data being transmitted in real time so that an error check on the substance data included in a packet is omitted at a transfer. The substance data area of an isochronous packet includes a part of image data of each channel (i.e., each device) Meanwhile, the asynchronous transfer is a kind of a control protocol, requiring an acknowledgement (i.e., a response) from the transfer destination. According to the IEEE 1394, the packet size of, for example, an isochronous packet needs to be a fixed length. The reason for this is that, when each node inquires with an arbiter circuit as to whether or not an isochronous transfer can be started, the standard requires a bit rate (i.e., a fixed value) be included in the inquiry.

Note that one cycle of a data transfer according to the IEEE 1394 Standard is 125$\mu$sec; in this time, data can be transferred, for each channel (i.e., each device), in the order of an isochronous packet first and then an asynchronous packet. The number of bytes of substance data (i.e., actual data) within an isochronous packet that is transferable in one cycle is different according to the finer specification of the IEEE 1394 Standard. That is, if the sums of substance data included in the isochronous packet of each channel are 1K bytes, 2K bytes, 4K bytes and 8K bytes, respectively, against the specifications of S100, S200, S400 and S800, then the isochronous packet of each channel can be transferred in one cycle.

Note that while the present embodiment is described by using the IEEE 1394 Standard, it is of course not limited as such, provided that a device is equipped with a data transfer method comprising a function equivalent to that of the isochronous transfer. For example, a universal serial bus (USB) or the like may be used. Meanwhile, the type of a device is arbitrary, provided that it is capable of receiving an input of variable length or fixed length data (such as image data, voice data or the like) and capable of outputting fixed length data, in lieu of being limited to an image processing device.

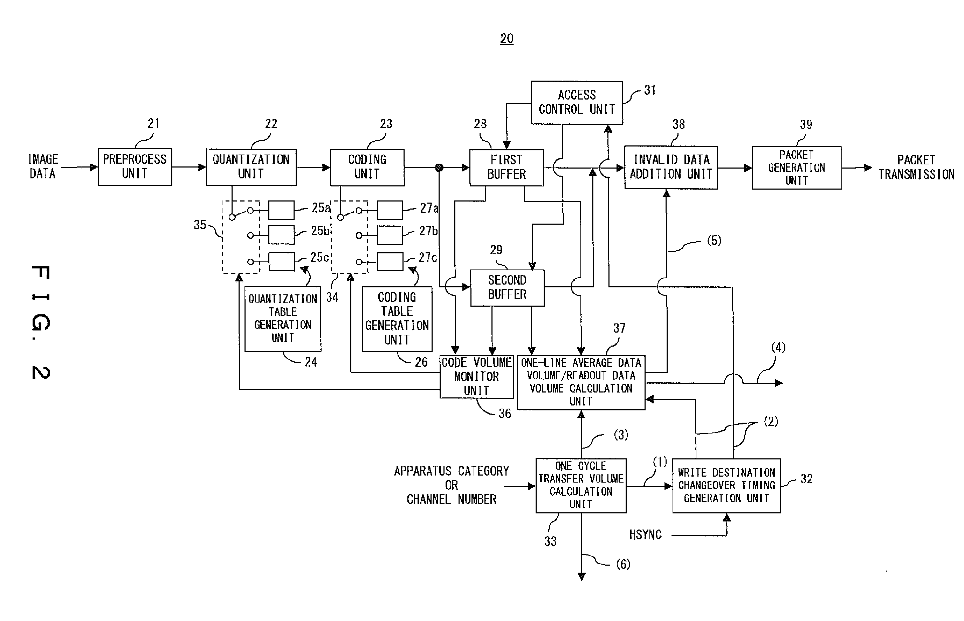

Next, Fig. 2 is a block diagram showing the configuration of a data transfer device according to a preferred embodiment of the present invention. The block diagram shown in Fig. 2 shows the transmission unit (which is constituted by a compression unit (i.e., a compression layer) and a transfer unit (i.e., a transfer layer); the transmission unit is defined as "data transfer device 20" hereinafter) of the individual image processing devices such as the camera 11, DVD player 12, terrestrial digital media broadcast-use tuner 13, car navigation device 14, and the like, which are described for Fig. 1. Incidentally, the reception units, such as the main display device 15, rear seat display device 17 and the like, which are for receiving the transmission data (i.e., image data according to the present embodiment) from the data transfer device 20 and displaying it, are described later.

Referring to Fig. 2, the data transfer device 20 comprises: a compression unit comprising a preprocess unit 21, a quantization unit 22, a coding unit 23, a quantization table generation unit 24, quantization tables 25a, 25b and 25c, a coding table generation unit 26, coding tables 27a, 27b and 27c, a first buffer 28, a second buffer 29, switch units 34 and 35, et cetera; and a transfer unit comprising an access control unit 31, a write destination changeover timing generation unit 32, a one-cycle transfer volume calculation unit 33, a one-line average data volume/readout data volume calculation unit 37, an invalid data addition unit 38, a packet generation unit 39, et cetera.

A description of the compression unit is now provided.

The preprocess unit 21 eliminates the redundancy contained in image data through a preprocessing such as a two-dimensional predictive differential pulse code modulation (two-dimensional predictive DPCM), one-dimensional predictive DPCM, one-dimensional discrete cosine transform (one-dimensional DCT), and the like.

The quantization unit 22 applies a coarser quantization to the result of the preprocessing. The coding unit 23 applies a variable length coding (such as Wyle coding, Golomb coding, Huffman coding, Run Length coding) to the coarsely quantized data.

The quantization table generation unit 24 retains bit strings (i.e., a trend of bit strings that are output), which tend to be output as the result of preprocessing, for each of the image processing devices (11 through 14; channels) and also generates a few likely applicable quantization tables (i.e., quantization tables 25a, 25b and 25c according to Fig. 2) on the basis of the channel of image data to be processed. Here, the above described quantization tables 25a, 25b and 25c are usually generated prior to starting an operation. It is, however, also possible to cause the quantization table generation unit 24 to generate the quantization tables 25a, 25b and 25c dynamically when operating the image processing device so as to not create a problem.

The coding table generation unit 26 retains bit strings (i.e., a trend of bit strings that are output), which tend to be output as the result of the coarser quantization for each image processing device (i.e., channel), and also generates a few likely applicable coding tables (i.e., coding tables 27a, 27b and 27c according to Fig. 2) on the basis of the channel of image data to be processed. Here, the above described coding tables 27a, 27b and 27c are also generated by the coding table generation unit 26 prior to starting an operation. It is, however, also possible to generate the coding tables 27a, 27b and 27c dynamically when operating the image processing device so as to not create a problem.

The first buffer 28 and second buffer 29 are structured as, for example, first-in first-out (FIFO) and store data sent from the coding unit 23.

A coded volume monitor unit 36 monitors the entirety of the coded volume of coded data sequentially stored in the first buffer 28 or second buffer 29 and, if the coded volume is too large, it issues a command to the switch unit 34 or 35 to select a coding table or a quantization table shortening the average coded volume, while if the coded volume is too small, it issues a command to the switch unit 34 or 35 to select a coding table or a quantization table increasing the coded volume.

The above described compression unit (which may include the preprocess unit) corresponds to the preprocess unit 91 shown in Fig. 9 or the compression layer shown in Fig. 12. Further, the first buffer 28 and second buffer 29 corresponds to the post-preprocess buffer 92 shown in Fig. 9 or the compressed data-use buffer 125 shown in Fig. 12.

Next is a description of the transfer unit.

The access control unit 31 controls an access (i.e., read and write) from the coding unit 23 to the first buffer 28 and second buffer 29. Here, the present embodiment is configured such that the buffers are in a two-stage buffer structure; one buffer is also viable. In the case of a two-stage buffer, the write destination changeover timing generation unit 32 generates a changeover signal (e.g., a clock signal indicating a timing for changing over the buffers to which a data writing from the coding unit 23 is permitted from the first buffer 28 to the second buffer 29, or from the second buffer 29 to the first buffer 28). Note that such a changeover can also be implemented by segmenting a data page in the case of using one buffer.

The one-cycle transfer volume calculation unit 33 calculates the number of lines to be transferred in one cycle and also calculates the number of bytes corresponding to the aforementioned number of lines.

The one-line average data volume/readout data volume calculation unit 37 obtains the data volume currently buffered in the first buffer 28 or second buffer 29 and calculates the number of average bytes in one line as an estimate for distributing invalid data and the number of bytes to be read from the first buffer 28 or second buffer 29.

The invalid data addition unit 38 adds invalid data after the end of file (EOF) line to the data output from the first buffer 28 or second buffer 29 on an as-required basis. As a padding, invalid bits (e.g., "0"s or stuffed bits) are added (i.e., stuffed).

The packet generation unit 39 generates an isochronous packet on the basis of the data to which invalid data has been added or the data output from the first buffer 28 or second buffer 29. The above described transfer unit corresponds to the transfer layer shown in Fig. 9 or 12.

There is a variation in the data length resulting from coding each line of input image data resulting from a variable length coding carried out by the coding unit 23; the present invention is contrived to add invalid data to the coded data, thereby making the coded results for the plurality of lines a fixed length. This contrivance makes it possible to satisfy a standard requiring a fixed length for the transferred data and to implement a real time transfer with a simple configuration.

Note that the data that has been coded at a variable length by the coding unit 23 is output to the first buffer 28 and second buffer 29. The access control unit 31, however, is configured to control the first buffer 28 and second buffer 29 so that data can be written to either of the two, on the basis of the signal from the write destination changeover timing generation unit 32. Therefore, the data that has been coded at a variable length is written to either one of the first buffer 28 and second buffer 29.

{Description of Operation}

The following is a description, in detail, of a process at the transfer unit (i.e., the later stages of the coding unit 23).

The description here is of a method for the one-cycle transfer volume calculation unit 33 (shown in Fig. 2) calculating a transfer volume in one cycle.

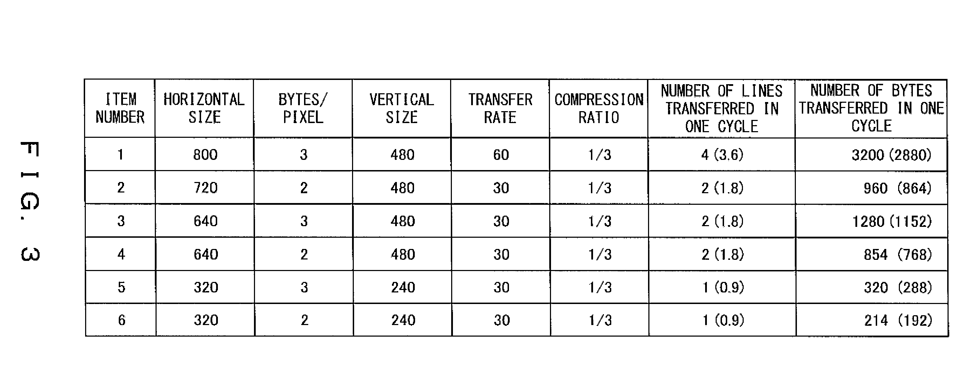

Fig. 3 is a diagram showing the size, transfer rate, compression ratio and one-cycle transfer volume of image data for each image processing device (i.e., the camera 11, (DVD) player 12, terrestrial digital media broadcast-use tuner 13, car navigation device 14, et cetera: channel).

Referring to Fig. 3, the "item number" corresponds to the category of device. For example, the item number "1" corresponds to image data from the car navigation device, the item number "2" corresponds to image data from the DVD player. Considering that each device is assigned to either of the channels, the item number can be regarded as corresponding to the channel number.

Further, the "horizontal size" is the number of pixels in one line of the image data; "bytes/pixels" is the number of bytes per pixel; "vertical size" is the number of lines of the image data; "transfer rate" is the number of image data (frames) to be transferred in one second; "compression ratio" is a compression ratio (i.e., a desired compression ratio) that is guaranteed to be accomplished through the processes from the preprocess to the variable length coding.

Further, the "number of lines transferred in one cycle" indicates the number of lines (Fig. 3 shows values rounded to integer values; the numbers in parentheses are values not rounded up) that must be transferred in one cycle (i.e., 125μsec) according to the IEEE 1394 in order for the image data of each channel to satisfy a specification such as a transfer rate. The "number of bytes transferred in one cycle" is the number of bytes corresponding to the number of lines.

The following is a description of a method for calculating the number of lines transferred in one cycle and the number of bytes transferred in one cycle by exemplifying the case of item number "1" (i.e., the car navigation device).

First, in item number "1", the transfer rate is 60 [frames per second] and one frame includes 480 [lines]. Therefore, the number of lines to be transferred in one second is 60 [frames per second]*480 [lines per frame].

Dividing the number of lines equally into each cycle:

$$60 \ [\text{frames/sec}]*480 \ [\text{lines/frame}]*125 \ [\text{μsec/sec}] = 3.6$$

lines

That is, transferring 3. 6 lines a second on average makes it possible to satisfy the condition for the transfer rate. For example, rounding off the number of lines transferred when transferring a plurality of lines (although such practice in not necessary), 4 lines will be transferred in one cycle.

In the case of transferring 4 lines in item number "1", 1 line has 800 bytes, each pixel has 3 bytes (1 pixel is red (R), green (G) and blue (B)), and the compression ratio is 1/3, and therefore the number of bytes corresponding to the 4 lines is:

$$800 \ [bytes/line]*4 \ [line]*3*1/3 = 3200 \ bytes$$

That is, various combinations are possible, depending on which of the above described S100 through S1600 is to be used and how many channels of data are to be in the isochronous packets that are to be transferred in one cycle.

For example, according to the S400 specification, the upper limit of the number of transfer bytes in one cycle against the sum of individual channels is 4k bytes. In the case of using the S400 specification and transferring the pieces of image data both from a car navigation device (i.e., the item number "1") and DVD player (i.e. , the item number "2"), the numbers of bytes to be transferred in one cycle is 3200 bytes and 960 bytes, respectively, and therefore the sum of them is 3200+960= 4160 bytes, exceeding 4k (4096) bytes.

In such a case, an arbiter (i.e., an arbitration circuit) gives the usage right of a bus to each node so that the upper limit of the number of transfer bytes in one cycle corresponding to the usage specification is satisfied.

Meanwhile, the one-cycle transfer volume calculation unit 33 receives an input of a device category (such as car navigation device, terrestrial digital media broadcast-use tuner, DVD player and such) or a channel number, and calculates (i.e., obtains) the number of lines and the number of bytes that are to be transferred in one cycle corresponding to the device category or the channel number.

Note that, while the number of bytes is the number of bytes (i.e., 2880 bytes) corresponding to, for example, 3.6 lines in the above described calculation, the present embodiment is configured to use the number of bytes (3200 bytes) corresponding to, for example, a well-rounded 4 lines as the number of bytes to be transferred.

Next, the write destination changeover timing generation unit 32 receives, by way of the signal line (1), an input of the number of lines generated by the one-cycle transfer volume calculation unit 33 and also receives an input of a horizontal synchronous (HSYNC) signal that is a signal (e.g., a clock) indicating the head position of each line, and then counts up the HSYNC signal until the number of lines is reached. A signal (i.e., a clock indicating a changeover timing) that indicates a position reaching the number of lines is output to the access control unit 31 by way of the signal line (2).

The access control unit 31 changes over buffers to which the writing of data from the coding unit 23 is permitted on the basis of the clock signal.

The one-line average data volume/readout data volume calculation unit 37 receives, by way of the signal line (3), an input of the number of lines and the number of bytes that are to be transferred in one cycle and that have been calculated by the one-cycle transfer volume calculation unit 33 and also receives, by way of the signal line (2), an input of a clock, which is calculated by the write destination changeover timing generation unit 32 and which indicates a changeover timing.

The one-line average data volume/readout data volume calculation unit 37, when the clock indicating a changeover timing is input thereto, obtains the number of bytes of data that is stored in a buffer (i.e., either the first buffer 28 or second buffer 29) that has just become invalid for the coding unit 23 to write data to at the aforementioned changeover timing and that is to be transferred in the present cycle.

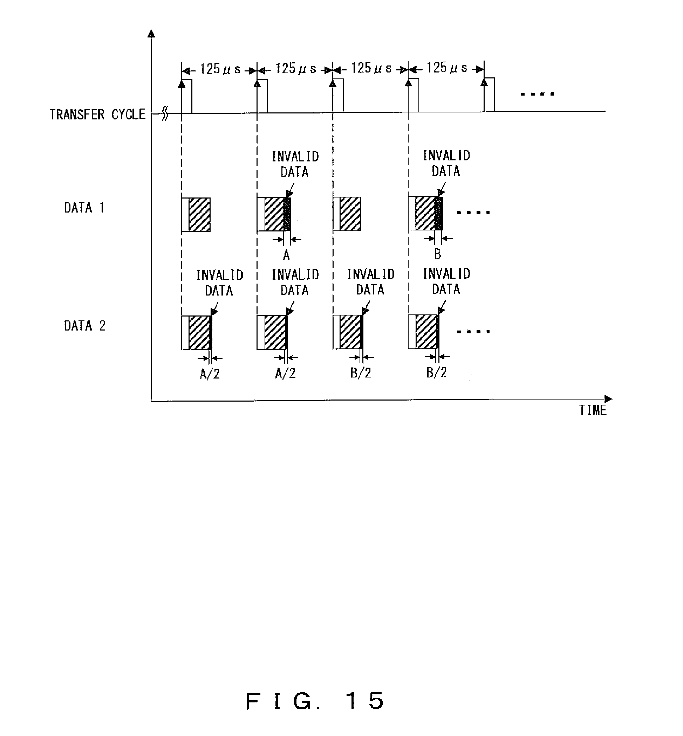

Then, the one-line average data volume/readout data volume calculation unit 37 receives the data from the one-cycle transfer volume calculation unit 33 in an amount equivalent to a few lines to be transferred in one cycle and calculates the number of average bytes per line. Meanwhile, if data of the portion of plural lines at a fixed length is transferred in a plurality of cycles, and if there is a surplus in data size to be read from a buffer (that is, in the case of plural cycles and fixed length), there is a need to add invalid data equivalent to the surplus, and therefore the number of bits of the surplus will be calculated. There are conceivably several patterns for adding invalid data. In data 1 shown Fig. 15 described later, invalid data is inserted into the last cycle, and in data 2, invalid data is distributed evenly in a plurality of cycles.

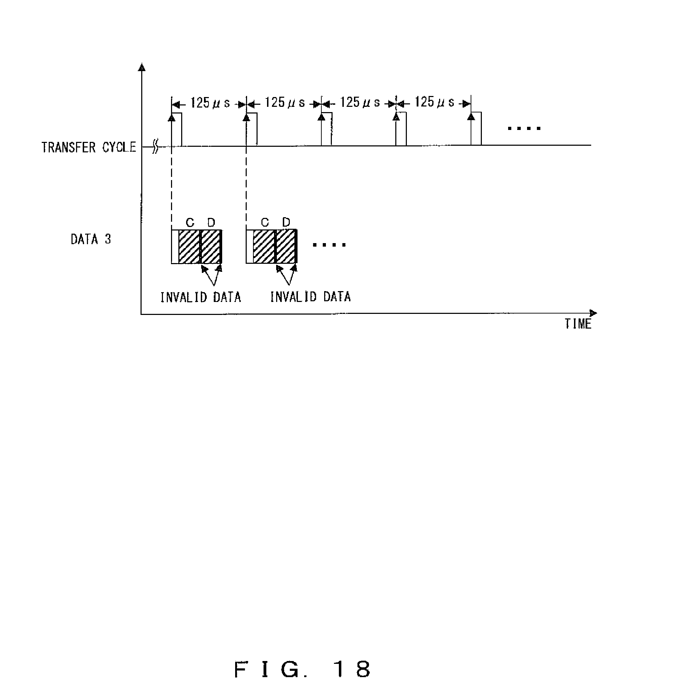

Further, there is a case in which a piece of data of the portion of plural lines at a fixed length is inserted in one cycle (refer to Fig. 18). In such a case, plural pieces of invalid data are inserted in one cycle.

Having received, by way of the signal line (4), an input of a data volume (i.e., the number of bytes) to be read from a buffer, the access control unit 31 informs a buffer for outputting data only to which writing from the coding unit 23 is not permitted at the time of instruction, that is, a buffer (i.e., either the first buffer 28 or second buffer 29) in which the data to be transferred in the present cycle is buffered, of the portion of the number of bytes starting from the head.

When the data is output from the buffer in units of the number of informed bytes according to the information given, the data is input into the invalid data addition unit 38. Meanwhile, the invalid data addition unit 38 also receives an input of the number of average bytes per line by way of the signal line (5).

The invalid data addition unit 38 adds invalid data (i.e., data including a sign indicating the value of the pixel is not valid; i.e., it is invalid data) in an amount that is equivalent to the difference in the following expression:

```
Difference= [data volume that must be changed to a fixed
length in the compression layer] - [data volume equivalent to
the specified number of lines from the buffer]
```

Then, the invalid data addition unit 38 outputs, to the packet generation unit 39, the data to which the invalid data has been added. The packet generation unit 39 receives, by way of the signal line (6), an input of the number of lines to be transferred in one cycle, which is calculated by the one-cycle transfer volume calculation unit 33.

The packet generation unit 39 counts up the number of times pieces of data are received, to each of which invalid data is added, from the invalid data addition unit 38 and, when the number thereof reaches the number of lines to be transferred in one cycle, generates substance data by interconnecting the received pieces of data for the present number of times and also generates an isochronous packet by adding a head part to the substance data and sends out the generated substance data to a transmission path.

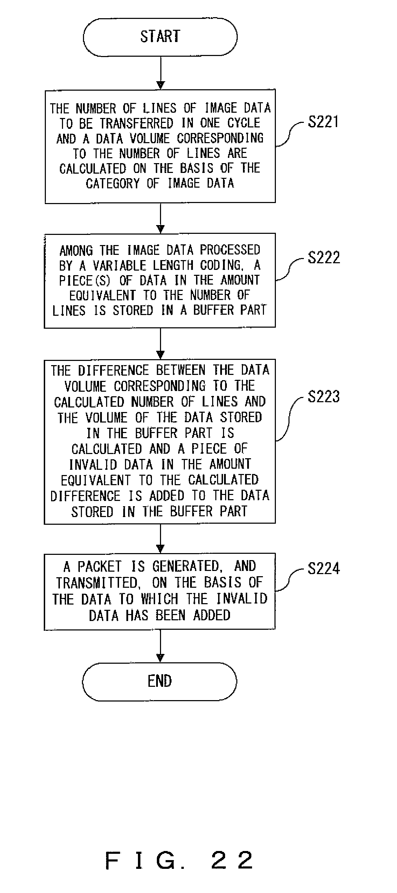

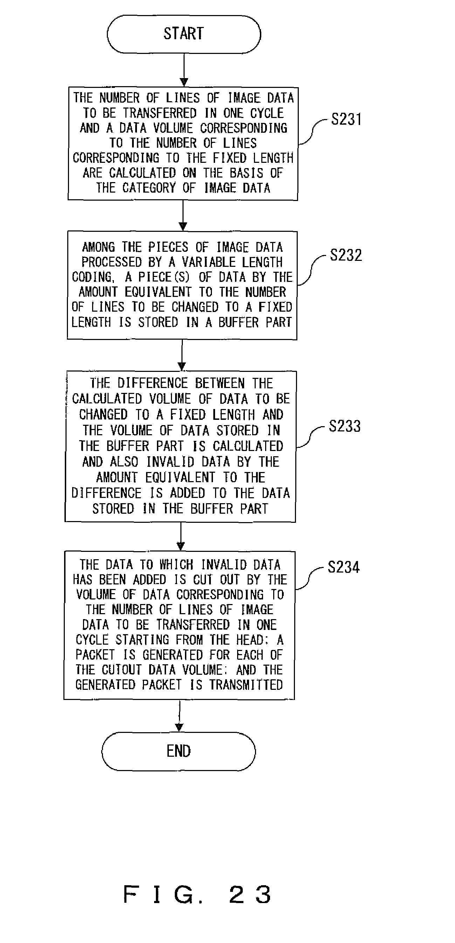

Next is a description of the case of processing by a computer or the like with reference to the process flows shown in Figs. 22 and 23.

The process shown in Fig. 22 describes a case in which the number of lines to be transferred in one cycle is equal to the number of lines to be included in one packet. The number of lines to be transferred in one cycle may not necessarily be equal to the number of lines to be included in one packet (i.e., the number of lines to be changed to a fixed length), the process of which case is shown in Fig. 23.

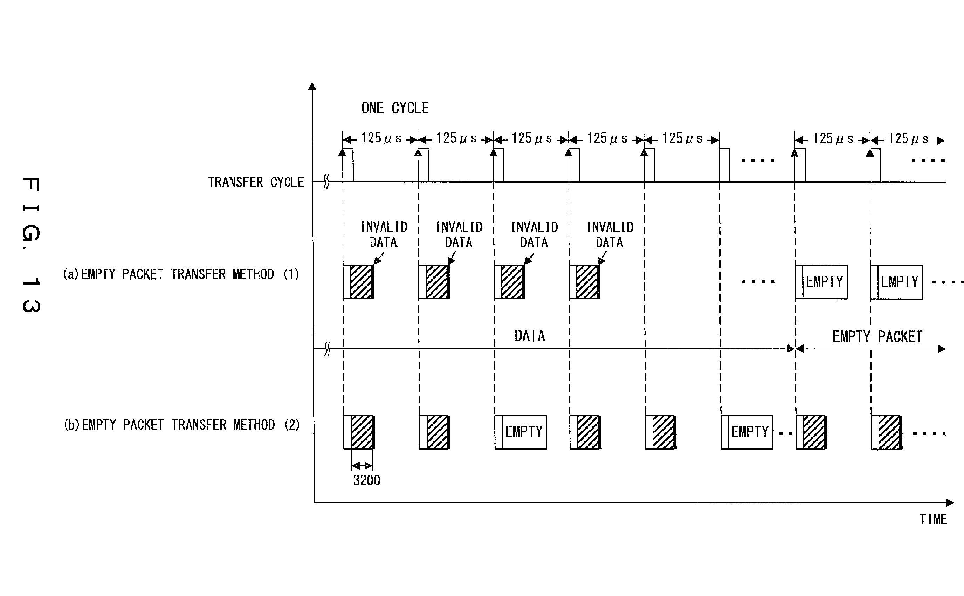

The flow chart shown in Fig. 22 describes the case in which the number of lines to be transferred in one cycle is equal to the number of lines to be included in one packet. This corresponds to Fig. 13. In step S221, the number of lines of image data to be transferred in one cycle and a data volume (i.e., the data volume to be transferred in one cycle) corresponding to the present number of lines are calculated on the basis of the category of image data.

In step S222 (also simply noted as "S222" hereinafter), among the pieces of image data to which a variable length coding (or another preprocessing) is applied, a piece(s) of data in an amount equivalent to the number of lines to be transferred in one cycle is stored in a buffer unit (i.e., memory).

In S223, the difference between the data volume corresponding to the calculated number of lines and the volume of the data stored in the buffer part is calculated and, if the volume of data stored in the buffer part is smaller, a piece of invalid data is added to the data stored in the buffer part in an amount equivalent to the calculated difference. Incidentally, if the volume of the data stored in the buffer part is larger, the process shown in Fig. 23 will be applied.

In S224, a packet is generated and sent out on the basis of the data to which the invalid data has been added.

Note that an alternative configuration may be such that the data stored in S222 is a predefined number of lines in place of the number of lines to be transferred in one cycle.

The flow chart shown in Fig. 23 shows a case in which the number of lines to be transferred in one cycle is smaller than the number of lines to be changed to a fixed length. These correspond to data 1 and data 2, which are shown in Fig. 15. First is a description of data 1.

Referring to the flow chart shown in Fig. 23, in S231, the number of lines of image data to be transferred in one cycle, the number of lines to be changed to a fixed length (i.e., the number of lines to be included in one packet), and a data volume corresponding to the number of lines changed to a fixed length are calculated on the basis of the category of image data.

In S232, among the pieces of image data processed by a variable length coding (or another preprocessing), a piece(s) of data in an amount equivalent to the number of lines to be changed to a fixed length is stored in a buffer part (i.e., memory).

In S233, the difference between the calculated volume of data to be changed to a fixed length and the volume of data stored in the buffer part is calculated and also invalid data is added to the data stored in the buffer part in an amount equivalent to the difference.

In S234, the data to which invalid data has been added is cut out in units of the volume of data corresponding to the number of lines of image data to be transferred in one cycle starting from the head, a packet is generated for each of the cutout data volumes, and the generated packet is transmitted.

For the data 2, S233 and S234 are slightly different.

In S231, the number of lines of image data to be transferred in one cycle, the number of lines to be changed to a fixed length (i.e., the number of lines to be included in one packet), and a data volume corresponding to the number of lines changed to a fixed length are calculated on the basis of the category of image data.

In S232, among the pieces of image data processed by a variable length coding (or another preprocessing), a piece(s) of data is stored in a buffer part (i.e., memory) in an amount equivalent to the number of lines to be changed to a fixed length.

In S233, the difference between the calculated volume of data to be changed to a fixed length and the volume of data stored in the buffer part is calculated and also a data volume is calculated so as to add invalid data, evenly in a plurality of cycles, to the data stored in the buffer part in an amount equivalent to the calculated difference.

In S234, image data to be transferred from a buffer in each cycle is cut out by a volume of data corresponding to the number of lines; a plurality of packets, corresponding to the cutout pieces of the volume of data, are generated by respectively adding invalid data placed evenly for the individual cutout data volume; and the generated pieces of data are transmitted. The process flow is not provided in a drawing herein.

[Embodiment 2]

Next is a description of a preferred embodiment 2, which is an exemplary modification of embodiment 1.

The header part of the above described embodiment 1 includes information such as information indicating the position of an HSYNC (horizontal synchronous) signal for determining the readout timing for each line of image data and the size of the image data (e.g., the number of lines and the number of pixels per line).

If data is decoded at a node on the reception side, it is preferable that the data include invalid data at a constant ratio. Because of this, the above description has handled the case of invalid data being appropriately distributed in the substance data of an isochronous packet.

Invalid data, however, may also be added at one place in either the head or tail of the substance data of an isochronous packet.

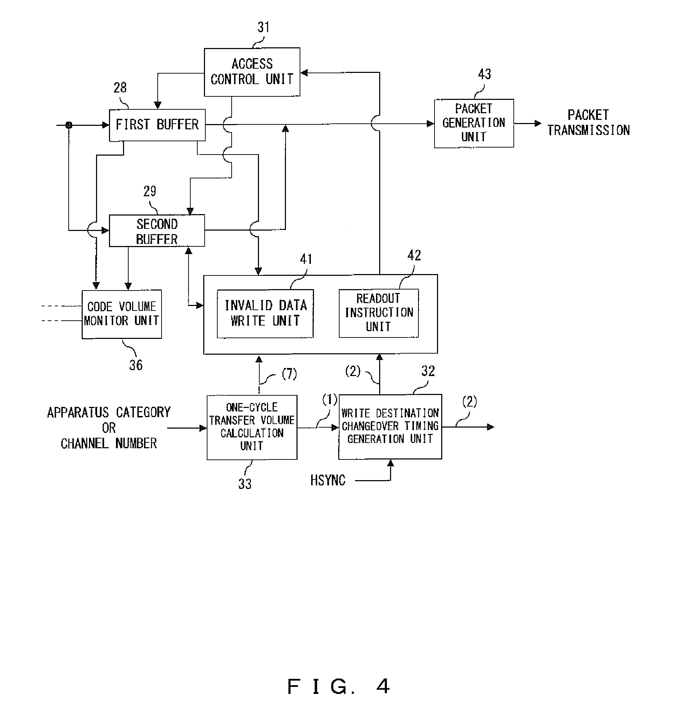

In such a case, compared with Fig. 2, the one-line average data volume/readout data volume calculation unit 37 is replaced with an invalid data write unit 41 and a readout instruction unit 42, while the invalid data addition unit 38 is eliminated, as shown in Fig. 4.

The invalid data write unit 41 shown in Fig. 4 receives a timing for changing over buffers that are the write destination by way of the signal line (2), and receives the number of bytes that are to be transferred in one cycle by way of the signal line (7). Then, the invalid data write unit 41 obtains the number of bytes of the data stored in a buffer that has been invalidated for writing from the coding unit 23, calculates the difference between the number of bytes to be transferred in one cycle and the number of the obtained bytes, and adds invalid data (i.e., invalid bytes) at the tail end of the data stored in the buffer in an amount equivalent to the calculated difference.

The readout instruction unit 42 receives, by way of the signal line (7), an input of the number of bytes to be transferred in one cycle, which is calculated by the one-cycle transfer volume calculation unit 33.

Then, when the invalid data write unit completes the writing of invalid data to the buffer, the readout instruction unit 42 outputs, to the access control unit 31, an instruction for reading the data that is stored in a buffer (i.e., either one of the first buffer 28 and second buffer 29) that is invalidated for writing from the coding unit 31 and which is to be transferred in the present cycle, in an amount equivalent to the number of bytes to be transferred in the present cycle, starting from the head of the data.

Each time data is received from a buffer in the previous stage, the packet generation unit 43 generates an isochronous packet having the received data in the substance data and sends out the generated packet to a transmission path.

Note that the above description has handled the case of making a fixed length for the number of lines (i.e., the number of bytes) to be at least transferred in one cycle. In general, however, the larger the number of lines, the larger the number of bytes with which the data may be made to be a fixed length, making it easier for the code volume monitor unit 36 to control.

[Embodiment 3]

The following handles the case of making a fixed length for a number of lines exceeding the number of lines to be transferred in one cycle. Also in this case, what are considered here are, as with the above description, a case in which invalid data is appropriately distributed in the substance data region of an isochronous packet and a case in which invalid data is added at the head or tail of the substance data region of an isochronous packet.

In the case of making a fixed length for the number of lines exceeding the number of lines to be transferred in one cycle, if invalid data is appropriately distributed, when receiving an input of the category of device or a channel number, the one-cycle transfer volume calculation unit 33 shown in Fig. 2 calculates (i.e., obtains) the number of lines to be transferred in one cycle, the number of lines to be changed to a fixed length, and the number of bytes corresponding to the number of lines to be changed to a fixed length, all of which correspond to the input category of the device or the channel number.

The write destination changeover timing generation unit 32 shown in Fig. 2 receives inputs of the number of lines to be changed to a fixed length and an HSYNC (horizontal synchronous signal) signal, and changes over buffers (i.e., either of the first buffer 28 and second buffer 29) to which a data writing from the coding unit 23 is permitted. That is, either of the first buffer 28 and second buffer 29 functions as a FIFO capable of storing pieces of variable length coded data in an amount equivalent to the number of bytes corresponding to the number of lines to be changed to a fixed length in this case.

The one-line average data volume/readout data volume calculation unit 37 receives, by way of the signal line (3), an input of the number of lines to be changed to a fixed length and the number of bytes corresponding to the number of lines, both of which have been calculated by the one-cycle transfer volume calculation unit 33, and also receives, by way of the signal line (2), an input of a clock indicating the changeover timing, which has been calculated by the write destination changeover timing generation unit 32.

Having received an input of the clock indicating a changeover timing, the one-line average data volume/readout data volume calculation unit 37 obtains the number of bytes of data to be transferred in the present cycle stored in a buffer (i.e., either of the first buffer 28 and second buffer 29) that has been invalidated for receiving a data write from the coding unit 23, triggered by the changeover timing.

Then the one-line average data volume/readout data volume calculation unit 37 divides the number of bytes obtained presently from the buffer by the number of lines to be changed to a fixed length, thereby calculating a data volume to be read from the buffer at one time.

Further, the one-line average data volume/readout data volume calculation unit 37 divides the number of bytes corresponding to the number of lines to be changed to a fixed length by the number of lines to be changed to a fixed length, thereby calculating the number of average bytes per line, which is used as a rough criterion when distributing invalid data in the number of bytes obtained from the buffer at that time.

Having received, by way of the signal line (4), an input of a data volume (i.e., the number of bytes) to be read from a buffer, the access control unit 31 instructs a buffer to which a data write from the coding unit is not permitted at that time, that is, the buffer (i.e., either of the first buffer 28 and second buffer 29) in which the data to be transferred at that time is buffered, to output the data by an amount equivalent to the aforementioned number of bytes starting from the head of the data.

When the data of the number of bytes is output from the buffer in compliance with the instructions, the data is input to the invalid data addition unit 38. Further, the invalid data addition unit 38 receives an input of the average number of bytes per line by way of the signal line (5).

The invalid data addition unit 38 calculates the difference between the average number of bytes per line and the number of bytes of the data obtained from the buffer and adds invalid data (i.e., data containing a sign indicating that the value of the pixel is not valid) in an amount equivalent to the calculated difference. Then, the invalid data addition unit 38 outputs the invalid data-added data to the packet generation unit 39.

The packet generation unit 39 receives, by way of the signal line (6), an input of the number of lines that is to be transferred in one cycle and that is calculated by the one-cycle transfer volume calculation unit 33.

The packet generation unit 39 counts up the number of times of receiving the invalid data-added data from the invalid data addition unit 38 and, when the counted number of times reaches the number of lines to be transferred in one cycle, generates substance data by interconnecting a number of received pieces of data equivalent to the number of lines and also generates an isochronous packet by adding a header part to the generated substance data.

[Embodiment 4]

Next is a description of the case of adding invalid data at the head or tail of data in a case in which data is changed to a fixed length for a number of lines exceeding the number of lines to be transferred in one cycle.

In this case, the invalid data write unit 41 shown in Fig. 4 receives, by way of the signal line (2), the timing of the changing over of the buffers that are the destination of writing from the coding unit 23, and also receives, by way of the signal line (7), the number of bytes corresponding to the number of lines to be changed to a fixed length. Then, the invalid data write unit 41 obtains the number of bytes of the data stored in a buffer that is invalidated for writing from the coding unit 23, calculates the difference between the number of bytes corresponding to the number of lines to be changed to a fixed length and the number of bytes that has been received, and adds invalid data (i.e., invalid bytes) in an amount equivalent to the calculated difference at the tail end of the data stored in the buffer.

The readout instruction unit 42 receives, by way of the signal line (7), an input of the number of bytes that corresponds to the number of lines to be transferred in one cycle and which is calculated by the one-cycle transfer volume calculation unit 33.

Then, when the invalid data write unit 41 completes writing the invalid data to the buffer, the readout instruction unit 42 outputs an instruction to the access control unit 31 to read, in the number to be transferred in one cycle starting from the head of the data, the pieces of data that are stored in the buffer (i.e., either of the first buffer 28 and second buffer 29) that is invalidated for writing from the coding unit 23 and which are to be transferred in the present cycle.

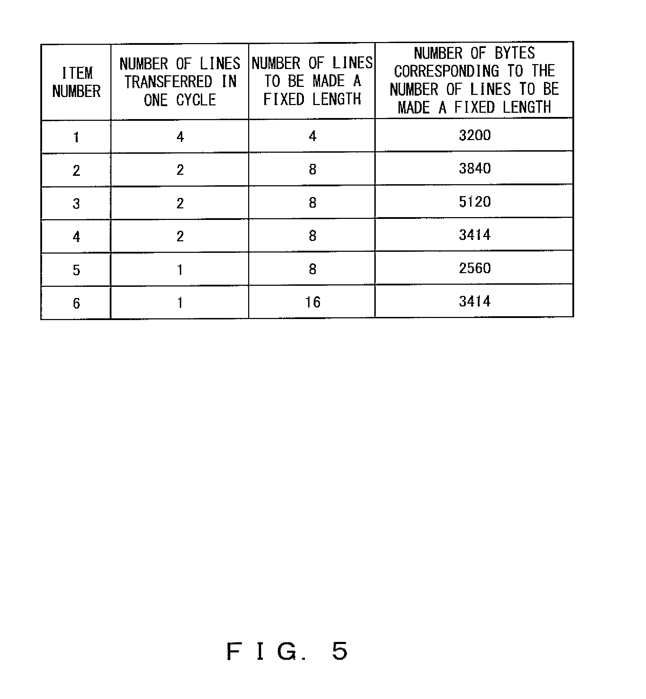

The packet generation unit 43 generates an isochronous packet having data every time it receives the data from the buffer at the previous stage and sends out the generated packet to a transmission path. Note that the above description has handled the case in which the number of lines to be changed to a fixed length is identical with the number of lines to be transferred in one cycle and the case in which the number of lines to be changed to a fixed length exceeds the number of lines to be transferred in one cycle. However, whether or not the number of lines to be changed to a fixed length exceeds the number of lines to be transferred in one cycle generally depends on the device (i.e., the channel). In this context, the one-cycle transfer volume calculation unit 33 usually retains a table as shown in Fig. 5 and, on the basis of the table, obtains the number of lines required to be transferred in one cycle, the number of lines to be changed to a fixed length, and the number of bytes corresponding to the number of lines to be changed to a fixed length.

For example, while the item number "2" shown in Fig. 5 corresponds to the item number "2" (i.e., image data from the DVD player) shown in Fig. 3, in the item number in Fig. 5, however, the number of lines to be transferred in one cycle is "2" lines, and therefore a coding volume control by the code volume monitor unit 36 cannot be carried out so easily if this number of lines is set as the number of lines to be changed to a fixed length. Accordingly, the configuration is such that [2 lines x 4= 8 lines] is set as the number of lines to be made a fixed line, thereby making it easy to carry out a coding volume control.

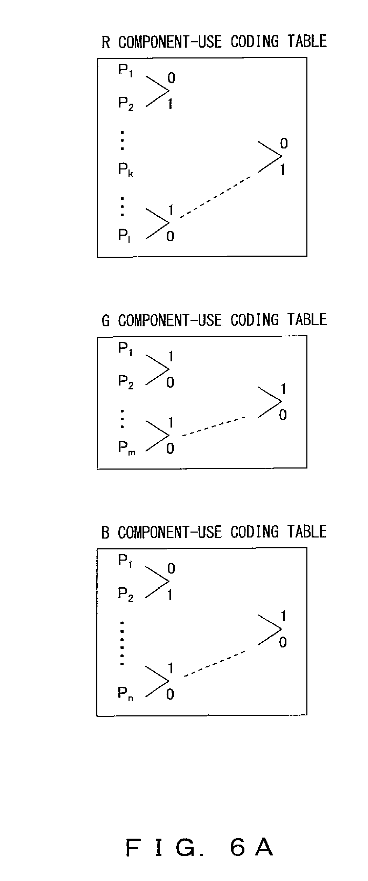

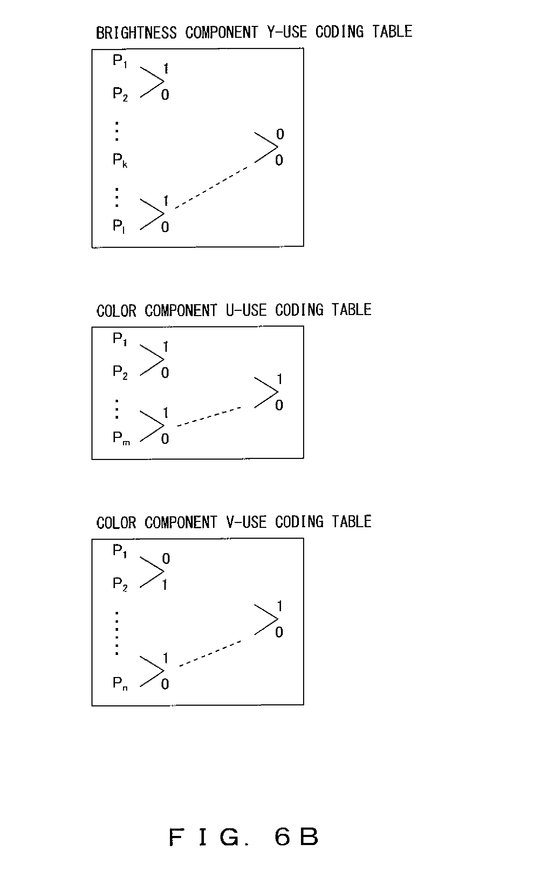

The following Figs. 6A and 6B show respective coding tables when pixels are represented by RGB and when they are represented by YUV, both in the case of adopting the Huffman coding as a variable length coding.

Fig. 6A is a diagram showing a coding table used for a Huffman method when pixels are represented by RGB.

As shown in Fig. 6A, the probability of the occurrence $P_K$ of data that are not valid (i.e., invalid data) is shown within an R component-use coding table corresponding to an R component. The invalid data will be correlated to a sign having redundancy in accordance with the probability of occurrence.

When the substance data of an isochronous packet is decoded at a reception side, the R component is referred to and whether or not it is invalid data is determined.

Fig. 6B is a diagram showing a coding table used for a Huffman method when pixels are represented by YUV.

As shown in Fig. 6B, the probability of occurrence $P_K$ of data that are not valid (i.e., invalid data) is shown within a brightness component Y-use coding table corresponding to a brightness component Y. The invalid data will be correlated to a sign having redundancy in accordance with the probability of occurrence.

When the substance data of an isochronous packet is decoded at a reception side, the brightness component is referred to and whether or not it is invalid data is determined.

[Embodiment 5]

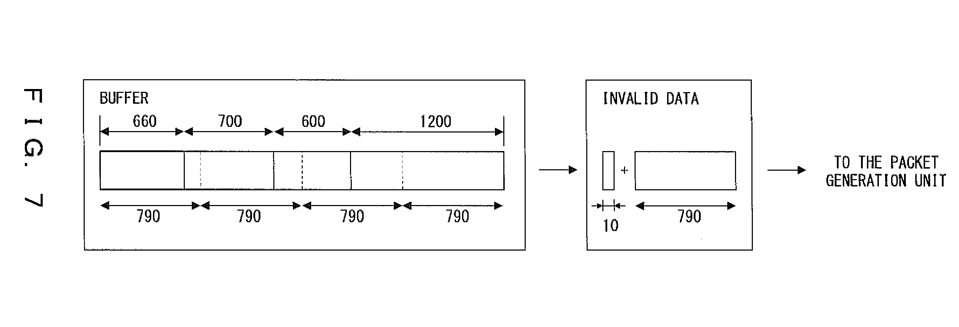

Fig. 7 is premised on a case of making data a fixed length by distributing invalid data within the data. This example sets [the number of lines to be transferred in one cycle] = [the number of lines to be changed to a fixed length] = 4 lines. The one-cycle transfer volume calculation unit 33 shown in Fig. 2 calculates the length of four lines to be 3200 bytes (=800 bytes multiplied by 4).

The data stored in a buffer during the cycle as a result of an actual variable length coding are 1200 bytes for the first line, 600 bytes for the second line, 700 bytes for the third line, and 660 bytes for the fourth line. The sum of them is 3160 bytes, that is, 40 bytes short of the 3200 bytes set as a fixed length.

The one-line average data volume/readout data volume calculation unit 37 shown in Fig. 2 divides the number of bytes (3160 bytes) of data obtained from the buffer by the number of lines (4 lines), thereby calculating the data volume (790 bytes) to be read from the buffer at one time.

The one-line average data volume/readout data volume calculation unit 37 also divides the number of bytes (3200 bytes) to be transferred in one cycle by the number of lines (4 lines) to be transferred in one cycle, thereby calculating the average number of bytes per line (800 bytes) that is used as a rough criterion when a number of bytes of invalid data equal to the number of bytes obtained from the buffer at that time is distributed.

The invalid data addition unit 38 calculates the difference between the average number of bytes (800 bytes) per line and the number of bytes (790 bytes) of the data input from the buffer at the previous stage, adds invalid data to the data input from the buffer by an amount equivalent to the calculated difference, and outputs the result to the packet generation unit 39.

[Embodiment 6]

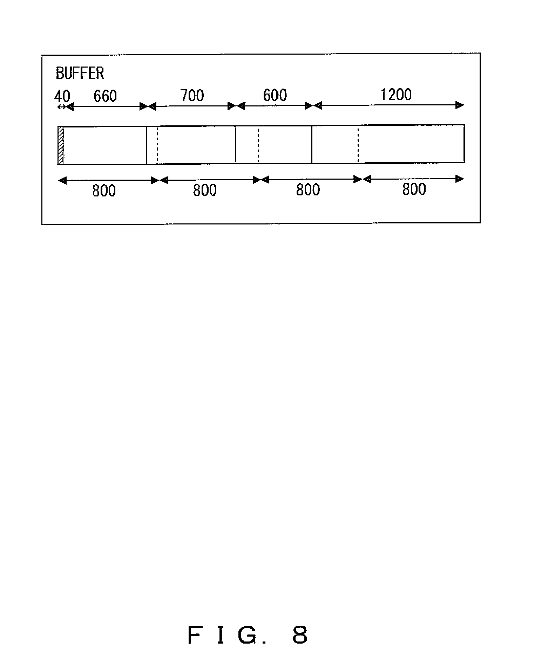

Fig. 8 is premised on a case of making data a fixed length by adding invalid data at the tail end of the data. This example sets [the number of lines to be transferred in one cycle]= [the number of lines to be changed to a fixed length]= 4 lines. The one-cycle transfer volume calculation unit 33 shown in Fig. 4 calculates the length of four lines to be 3200 bytes (=800 bytes multiplied by 4).

The data stored in a buffer during the cycle as a result of an actual variable length coding are 1200 bytes for the first line, 600 bytes for the second line, 700 bytes for the third line, and 660 bytes for the fourth line. The sum of them is 3160 bytes, that is, 40 bytes short of the 3200 bytes set as a fixed length.

The invalid data write unit 41 shown in Fig. 4 calculates the difference between the number of bytes (3160 bytes) of the data obtained from the buffer and the length of four lines (3200 bytes) obtained from the one-cycle transfer volume calculation unit 33 and adds invalid data to the tail end of the data stored in the buffer by an amount equivalent to the calculated difference (40 bytes).

When the invalid data write unit 41 completes writing the invalid data, the readout instruction unit 42 shown in Fig. 4 outputs an instruction to the access control unit 31 to read out, from the buffer, the number of bytes (3200 bytes) that is calculated by the one-cycle transfer volume calculation unit 33 and that corresponds to the number of lines to be transferred in one cycle.

The data readout from the buffer is output to the packet generation unit 43 shown in Fig. 4.

Note that the configuration described above is such that information indicating the position of the HSYNC signal determining the timing of reading the lines is inserted into the header part of the isochronous packet to be transmitted so that the reception side determines a break of the lines; another method can also be used to determine such a break. An exemplary configuration may be a configuration in such a manner so as to insert a coded line end signal indicating the end of a line at the end of each line. In such a case, the line end signal is correlated to a sign having redundancy in accordance with the probability of occurrence.

Further, the above description exemplifies the case of the number of lines calculated by the one-cycle transfer volume calculation unit 33 being an integer number; the number of lines may also be a fraction (i.e., a non-integer value).

[Embodiment 7]

A preferred embodiment 7 provides a description of transferring an empty packet.

Fig. 13 shows the timing of a data transfer at one cycle time of 125μsec according to the IEEE 1394. The number of lines to be transferred must be completed within one cycle in order for the image data of each channel to satisfy a specification such as the condition for a transfer rate.

In the case of, for example, a car navigation device, the number of lines to be transferred in one cycle and the number of bytes are calculated. One frame of a car navigation device is 800x480 and the frame rate of transfer in one second is 60 frames per second. Further, one frame contains 480 lines. Therefore, the number of lines to be transferred in one second is 60 [frames/sec]*480 [lines/frame]. Distributing this number of lines equally to each cycle, the number of lines per cycle is:

$$60\ [\mathrm{frames/sec}]*480\ [\mathrm{lines/frame}]*125\ [\mathrm{\mu sec/1\ sec}]=3.6$$
$$\mathrm{lines}$$

That is, a configuration capable of transferring 3.6 lines per cycle makes it possible to satisfy the condition for the transfer rate. If it is configured to transfer a plurality of lines in a well-rounded manner (although such a practice is not necessary), then four lines will be transferred in one cycle. Here, taking the blank period of a video image into consideration, there is also a method of providing an approximate 10% margin by setting:

$$60\ [\mathrm{frames/sec}]*480\ [\mathrm{lines/frame}]*125\ [\mathrm{\mu sec/sec}]*0.9$$

When transferring four lines, one line is 800 bytes, each pixel is 4 bytes (i.e., one pixel is R, G and B, or the like), and the compression ratio is (1/3) and therefore the number of bytes corresponding to the four lines is:

$$800\ [\mathrm{bytes/line}]*4\ [\mathrm{lines}]*3*(1/3)=3200\ \mathrm{bytes}$$

However, the equivalent to 0.4 lines (= 4-3.6) is not required. Considering one frame of the transferred data 120 times (=480 lines/4 lines), 48 lines (= 120*0.4 lines) is the number of lines to be excessively transferred upon transferring one frame. Therefore, an empty packet needs to be transferred 12 times (= 48 lines/4).

Fig. 13 (a) shows a method (1) for transferring an empty packet. This exemplifies the case of transferring empty packets 12 times in a lump at the end. Transferring empty packets in a lump at the end is faced with problems such that a memory size needs to be provided at a receiving end of the output empty packets.

Accordingly, the use of a method (2) for transferring empty packets by distributing empty packets as shown in Fig. 13 (b) solves the problem. For example, the present exemplary case transfers the empty packets 12 times by distributing them.

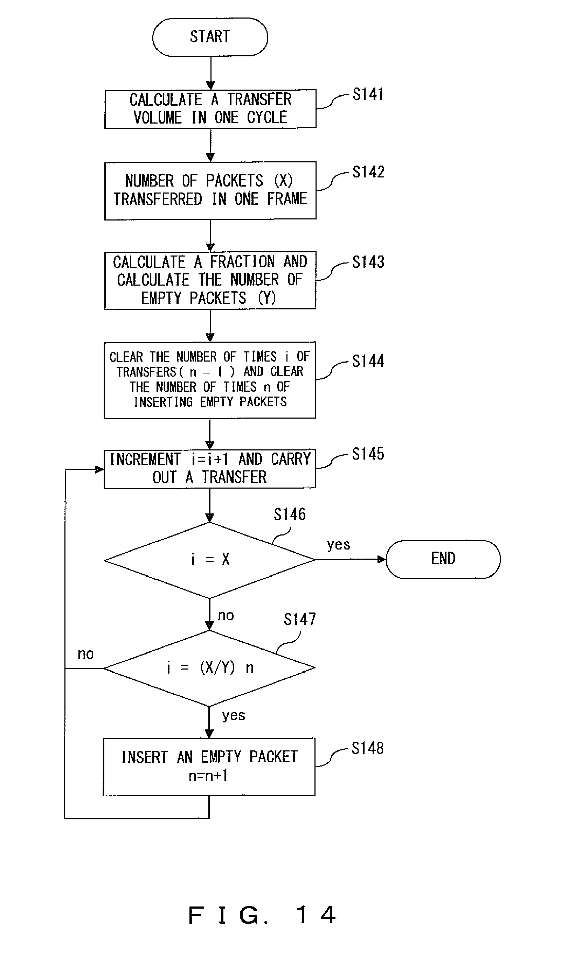

Fig. 14 shows a process flow diagram of a distributed transfer of empty packets in one frame.

In S141, how large a data volume is to be transferred in one cycle (e.g., 125μsec) is calculated. In the above described example of car navigation, it is:

$$60 \text{ [frames/sec]} * 480 \text{ [lines/frame]} * 125 \text{ [μsec/1 sec]} = 3.6 \text{ lines}$$

In S142, the number of transfer packets per frame is calculated. For example, what is calculated is the total number of packets X per frame:

$$X = (480 \text{ [lines]} / 4 \text{ [lines]}) = 120 \text{ times}$$

In S143, a fraction [4 lines - 3.6 lines]= 0.4 lines is calculated on the basis of the calculation result. Then, the number of times of transferring empty packets is calculated. For example, the number of empty packets Y per frame is calculated as:

$$Y = (480 \text{ [lines]} / 4 \text{ [lines]}) * (4 \text{ [lines]} - 3.6 \text{ [lines]}) = 12 \text{ times}$$

In S144, the number of times i of transfers and the number of times n of inserting empty packets are cleared (n= 1).

In S145, "i" is incremented for each transfer of data by an amount equivalent to one cycle (i.e., i= i+1).

In S146, whether or not i= X is judged. If it is not, the process shifts to S147 to judge whether or not an empty packet is to be inserted because the amount of data equivalent to one frame is not yet transferred. In contrast, if i= X, then the data transfer in the amount equivalent to one frame is completed and accordingly this process ends, and then the transfer of the next frame (which is not shown in the process flow herein) is started. In the case of shifting to the next frame, the shift takes place in synchrony with a vertical synchronous (VSYNC) signal.

In S147, whether or not i= (X/Y)*n is judged. That is, one empty packet is inserted for every 10 data transfers according to the present exemplary case in order to insert empty packets at equal intervals. Further, the value of "n" will never be larger than that of "Y". If the aforementioned expression applies, the process shifts to S148 to insert an empty packet. Otherwise the process shifts to S145.

In S148, an instruction to insert an empty packet is issued, the value of n is incremented (n= n+1), and the process is shifted to S145. That is, this instruction makes it possible to send an empty packet every time a substance data packet is sent a certain number of times.

Further, a description of the case of carrying out the above described process in the system shown in Fig. 2 is provided.

The one-cycle transfer volume calculation unit 33 shown in Fig. 2 calculates how large a data volume can be transferred in one cycle (i.e., 125μsec).

Then, the insertion timing for the empty packet shown in S142 through S148 is calculated by the one-cycle transfer volume calculation unit 33 or by a specific use process unit that is separately equipped.

The packet generation unit 39 receives, by way of the signal line (6), an input of the information of the number of lines to be transferred in one cycle and empty packet insertion information, which are calculated by the one-cycle transfer volume calculation unit 33. In the case of equipping a separate process unit, another signal line is required.

Then, the packet generation unit 39 counts up the number of times of receiving, from the invalid data addition unit 38, data to which invalid data has been added. When the number of times reaches the number of lines to be transferred in one cycle, the packet generation unit 39 generates substance data by interconnecting the pieces of data received for the aforementioned number of lines, and also generates an isochronous packet by adding the substance data to send out the generated packet to a transmission path. If the empty packet insertion information is "enable" in this event, the packet generation unit 39 sends out an empty packet to the transmission path, while if the information is "disable", it sends out the packet of the substance data to the transmission path.

[Embodiment 8]

A preferred embodiment 8 describes a case in which there is no affinity between the data (i.e., the number of lines) to be transferred in one cycle and the data (i.e., the number of lines) stored in a buffer. the data generated by the compression unit as in the embodiment 7, that is, a case in which the number of lines to be transferred in one cycle is not the same as the number of lines of the data stored in the buffer.

Fig. 15 exemplifies the case in which there is no affinity. The description here is provided premised on an isochronous packet for which one cycle is 125μsec as in the case of embodiment 7. With the number of lines of a one-cycle transfer being, for example, 4 lines and if the number of lines of data stored within the buffer is 8 lines, that is, if the units of processing in the transfer layer are smaller than the units of processing in the compression layer, then the control is carried out as the data 1 shown in Fig. 15.

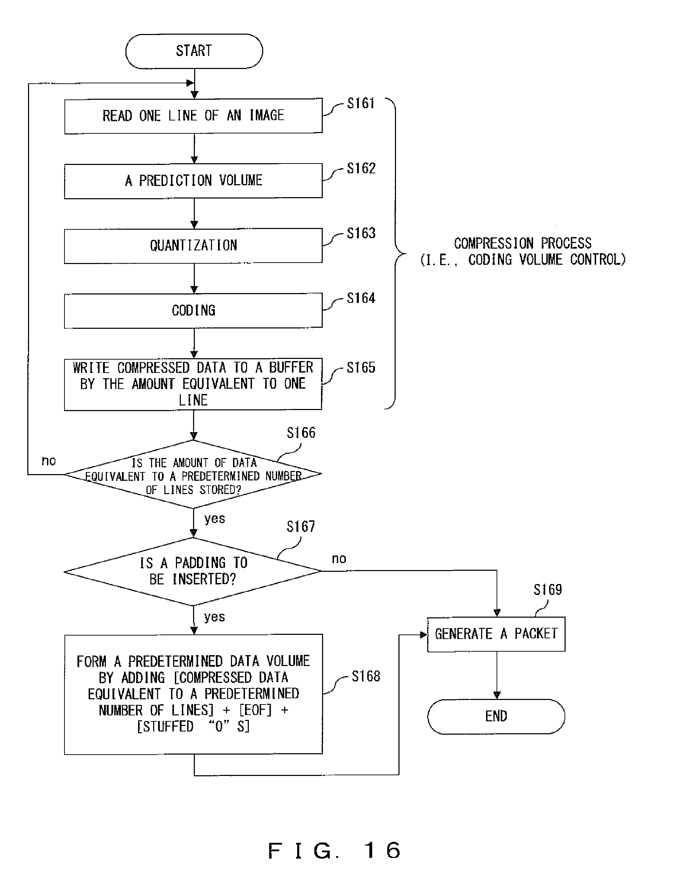

Next is a description of Fig. 16, which is a flow chart showing the operation of the embodiment 8.

In S161, data is obtained. For example, data in an amount equivalent to one line of one frame of image data is obtained from an image processing device. In S162 through S164, a compression process is carried out (in which a coding volume control and an encryption process may be included). In S162, a prediction volume is calculated by carrying out a prediction coding; in S163, quantization is carried out; and in S164, coding is carried out.

In S165, for example, the compressed data is written to a buffer in an amount equivalent to one line. Here, the buffer is the post-preprocess buffer 92 shown in Fig. 9 or the compressed data-use buffer 125 shown in Fig. 12; or the first buffer or second buffer shown in Fig. 2. The processes in S162 through S165 are approximately the same as those carried out in the above described compression unit (i.e., the compression layer) shown in Fig. 12, and therefore a detailed description is not provided here.

In S166, it is judged whether or not transfer data in the amount equivalent to a predetermined number of lines is stored. If it is stored, the process shifts to S167. If it is not stored, the process shifts to S168. Here, the predetermined number of lines represents the units of processing in the transfer layer so as to determine whether or not a volume in an amount equivalent to the number of lines to be transferred in one cycle has been accumulated. This step is carried out by the one-line average data volume/readout data volume calculation unit 37 if the process is implemented by the configuration shown in Fig. 2.

In S167, whether or not a padding is to be inserted is determined. The present exemplary case premises that the number of compressed lines is "8" and the number of lines to be transferred in one cycle is "4" and therefore, if it is the eighth line, the process shifts to S168. Otherwise data in an amount equivalent to four lines with an EOF added to the data is generated and the process shifts to S169. This process is carried out by the one-line average data volume/ readout data volume calculation unit 37 with the function added thereto if the process is implemented by the configuration shown in Fig. 2.

Incidentally, if the compressed data in an amount equivalent to four lines has a larger volume than the data volume of one packet, an amount equivalent to the difference of the two volumes will be assigned to the head of the subsequent packet.

In S168, a predetermined data volume (i.e., 8 lines) is formed by integrating the compressed data in an amount equivalent to the predetermined lines, the EOF and a set of stuffed "0"s, and the process shifts to S169. This step is carried out by the invalid data addition unit 38 with the function added thereto if the process is implemented by the configuration shown in Fig. 2.

In S169, a packet is formed in compliance with the specification of the transfer path and the packet is transferred. This step is carried out by the packet generation unit 39 if the process is implemented by the configuration shown in Fig. 2.

Note that whether or not there is a need to insert a padding is determined after a data volume equivalent to a predetermined number of lines is accumulated in the above described step; an alternative configuration may be one to determine whether or not there is a need to insert a padding for an amount equivalent to one line and then determine whether or not the amount of data equivalent to one line has been stored. Judgment for a padding in this event is carried out by counting for each line with a counter or the like and by a counter value.

Next is a description of the case of carrying out the above described process using the system shown in Fig. 2.

The one-line average data volume/readout data volume calculation unit 37 calculates the timing for inserting the padding (i.e., padding insertion information) shown in S166 and S167. Here, the calculation is performed by a specifically equipped process unit.

Having received, by way of the signal line (4), an input of a data volume (i.e., the number of bytes, or more precisely, the number of bits because of variable coding) to be read from a buffer, the access control unit 31 instructs a buffer to which a write from the coding unit 23 is not permitted at the that point in time, that is, the buffer (either of the first buffer 28 and second buffer 29) in which the data to be transferred in the present cycle has been buffered, to output a piece of data in an amount equivalent to the number of bytes starting from the head of the data. When the data is output from the buffer in the amount equivalent to the number of bytes in accordance with the instruction from the access control unit 31, the data is input to the invalid data addition unit 38.

The invalid data addition unit 38 calculates the difference between the average number of bytes per line obtained from the one-line average data volume/readout data volume calculation unit 37 and the number of bytes of the data obtained from the buffer and adds invalid data in an amount equivalent to the calculated difference. In this event, invalid data is added if the padding insertion information is "enable", while data to which a padding is not added is output to the packet generation unit 39 if the information is "disable". If a specific process unit is equipped, another signal line is required.

The packet generation unit 39 receives, by way of the signal line (6), an input of the information of the number of lines to be transferred in one cycle; this information is calculated by the one-cycle transfer volume calculation unit 33.

Then, the packet generation unit 39 counts up the number of times of receiving data to which invalid data has been added from the invalid data addition unit 38. When the number of times reaches the number of lines to be transferred in one cycle, the packet generation unit 39 generates substance data by interconnecting the pieces of data for the number of times equivalent to the aforementioned number of lines; and also generates an isochronous packet by adding the substance data and sends out the generated packet to a transmission path.

[Embodiment 9]

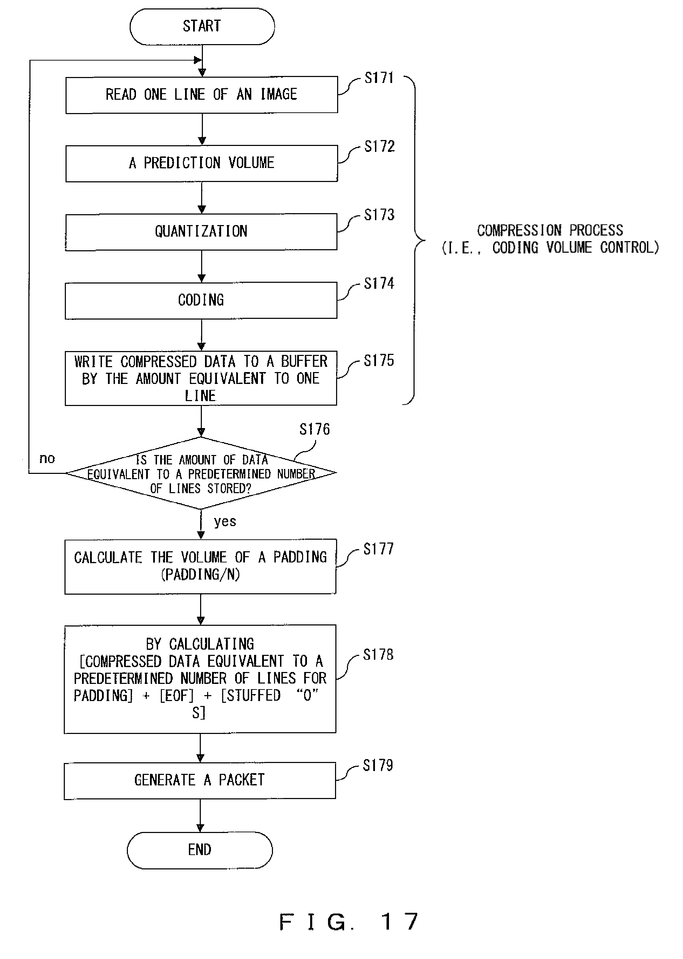

In the case of embodiment 8, if the number of lines to be transferred in one cycle is, for example, 4 lines, then the following problem occurs when the number of lines of data stored within the buffer is 8 lines. That is, the buffer size of the compression unit (i.e., the compression layer) cannot be suppressed to a minimum. Further, if it is configured to stuff an EOF and "0"s only in the last packet as shown in Fig. 17, there may sometimes be a burden at the end of the data when a coding volume is adjusted.

Accordingly, it is configured to add the parts stuffed with "0"s (as indicated by A and B of the data 1 shown in Fig. 15) by distributing them in the first packet. That is, they are added at the end of the EOF of the respective packets by changing the parts stuffed with "0"s from A and B to A/2 and B/2, respectively, as indicated in the data 2.

Next is a description of Fig. 17, which is a flow chart showing the operation of the embodiment 9.

In S171, data is obtained. For example, the data is obtained from an image processing device in an amount equivalent to one line of one frame of image data. In S172 through S175, a compression process is carried out (in which a coding volume control and an encryption process may be included). In S172, a prediction volume is calculated by carrying out a prediction coding; in S173, quantization is carried out; and in S174, coding is carried out.

In S175, for example, the compressed data is written to a buffer in an amount equivalent to one line. Here, the buffer is the post-preprocess buffer 92 shown in Fig. 9 or the compressed data-use buffer 125 shown in Fig. 12; or the first buffer or second buffer shown in Fig. 2. The processes in S172 through S175 are approximately the same as those carried out in the above described compression unit (i.e., the compression layer) shown in Fig. 12, and therefore a detailed description is not provided here.

In S176, whether or not transfer data is stored in an amount equivalent to a predetermined number of lines is judged. If it is stored, the process shifts to S177. If it is not stored, the process shifts to S178. If the number of lines to be transferred in one cycle is "4" with the number of compression lines being "8", as in the case of embodiment 8, the condition of the transfer layer and that of the compression layer match each other in 2 cycles and therefore the condition will be satisfied if the compressed data is sent in two cycles of the transfer cycle in an amount equivalent to 8 lines. Alternatively, the number of lines, i.e., "8", stored in the buffer may be divided into two to set the 4 lines as the predetermined lines. In the former case, there may not necessarily be 4 lines of compressed data within one cycle; rather there may be 3 lines, 5 lines or even a non-integer number of lines, e.g., 4.5. What is necessary is that the amount equivalent to 8 lines is completely transmitted in the second cycle. In the latter case, the control is carried out as transferring 4 lines in order to transmit data evenly.

This step is carried out by the one-line average data volume/readout data volume calculation unit 37 with the function added if the process is implemented by the configuration shown in Fig. 2.

In S177, the volume of a padding is calculated. If the number of lines to be transferred in one cycle is, for example, 4 lines with the number of lines of data stored in a buffer being 8 lines as described above, the stuffed "0" part A or B (the volume of a padding) as calculated for the embodiment 8 is calculated (as preparation). Then, the A and B are divided by 2 since 8 lines/4 lines= 2. That is, the volume of stuffed "0" parts A/2 and B/2 (i.e., the volume of a padding), which are inserted after one packet of data and the EOF shown in the data 2, are calculated, and the process shifts to S179. This step is carried out by the one-line average data volume/readout data volume calculation unit 37 with the function added if the process is implemented by the configuration shown in Fig. 2.

In S178, the amount of compressed data equivalent to the predetermined lines, the EOF, and the stuffed "0"s are added together (i.e., data+EOF+stuffed "0"s for the calculated volume (A/2 or B/2)) for the four-line data, and the process shifts to S179. This step is carried out by the invalid data addition unit 38 with the function added if the process is implemented by the configuration shown in Fig. 2.

In S179, a packet is formed in compliance with the specification of a transfer path and the packet is transferred. This step is carried out by the packet generation unit 39 if the process is implemented by the configuration shown in Fig. 2.

Note that whether or not there is a need to insert a padding is determined after a data volume equivalent to a predetermined number of lines is accumulated in the above described step; an alternative configuration may be one to determine whether or not there is a need to insert a padding for an amount equivalent to one line, and then determine whether or not the amount of data equivalent to one line has been stored, and, when the stored line reaches the predetermined lines, carry out the process of S178. Judgment for a padding in this event is carried out by counting for each line with a counter or the like and by a counter value.

Note that the padding volume may not necessarily be calculated for each time, and it may be calculated when there is a change.

Next is a description of the case of carrying out the above described process using the system shown in Fig. 2.

The one-line average data volume/readout data volume calculation unit 37 calculates the timing for inserting the padding (i.e. , padding insertion information) shown in S176 and S177. Here, the calculation is performed by a specifically equipped process unit.

When the data is output from the buffer by the amount equivalent to the number of bytes in accordance with the instruction from the access control unit 31, the data is input to the invalid data addition unit 38.

The invalid data addition unit 38 adds invalid data (in an amount equivalent to A/2 and B/2) as shown in S178 on the basis of the padding volume information and the difference between the average number of bytes per line obtained from the one-line average data volume/readout data volume calculation unit 37 and the number of bytes (more precisely, the number of bits) of the data obtained from the buffer. In this event, the invalid data addition unit 38 outputs the padding to the packet generation unit 39 in accordance with the padding volume information. If a separate processing unit is equipped, another signal line is required.

The packet generation unit 39 receives, by way of the signal line (6), an input of the information of the number of lines to be transferred in one cycle, which is the information calculated by the one-cycle transfer volume calculation unit 33.

Then, the packet generation unit 39 counts up the number of times of receiving data to which invalid data has been added from the invalid data addition unit 38. When the number of times reaches the number of lines to be transferred in one cycle, the packet generation unit 39 generates substance data by interconnecting the pieces of data for a number of times equivalent to the aforementioned number of lines, and also generates an isochronous packet by adding the substance data and sends out the generated packet to a transmission path.

[Embodiment 10]

In a preferred embodiment 10, a description is provided for a case in which there is no affinity between regular data (i.e., the number of lines to be transferred in one cycle) and data which is generated by the compression unit and which is stored in a buffer (i.e., the number of lines), wherein the number of lines to be transferred in one cycle being "8" and the number of lines stored in the buffer being "4", that is, the unit of processing in the transfer layer is larger than that of processing in the compression layer. The description is premised on an isochronous packet for which one cycle is 125μsec. If the number of lines to be transferred in one cycle is, for example, "8", and the number of lines stored in a buffer is "4", the control is carried out as the data 3 shown in Fig. 18.

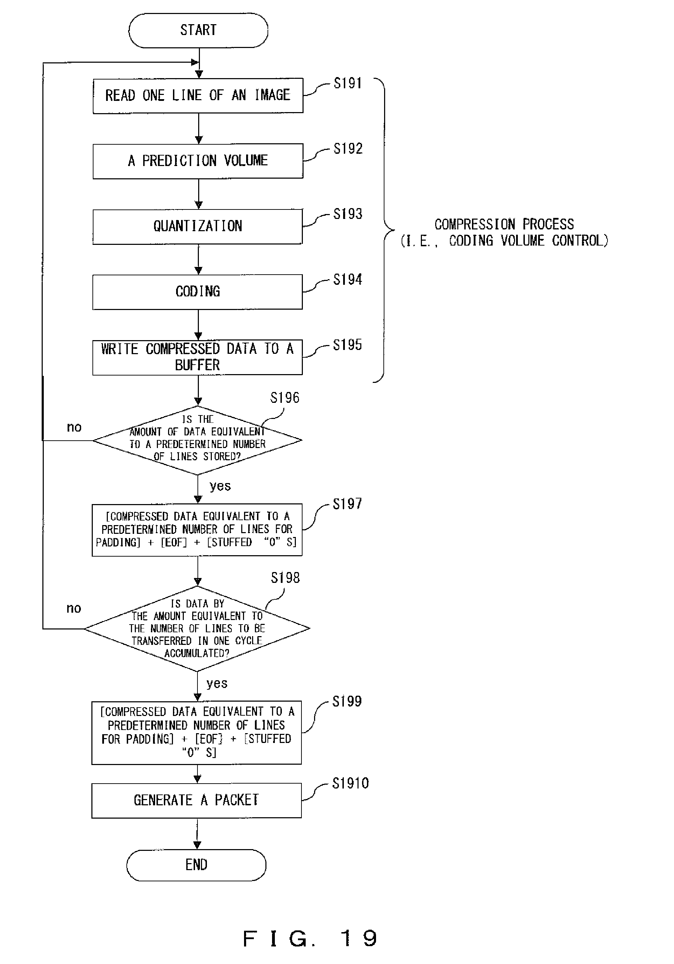

Fig. 19 is a flow chart showing the operation of the embodiment 10.

In S191, data is obtained. For example, data is obtained from an image processing device in an amount equivalent to one line of one frame of image data. In S192 through S194, a compression process is carried out (in which a coding volume control and an encryption process may be included). In S192, a prediction volume is calculated by carrying out a prediction coding; in S193, quantization is carried out; and in S194, coding is carried out.

In S195, for example, the compressed data is written to a buffer in an amount equivalent to one line. Here, the buffer is the post-preprocess buffer 92 shown in Fig. 9, the compressed data-use buffer 125 shown in Fig. 12, or the first buffer or second buffer shown in Fig. 2. The processes in S192 through S195 are approximately the same as those carried out in the above described compression unit (i.e., the compression layer), and therefore a detailed description is not provided here.

In S196, whether or not transfer data is stored in an amount equivalent to a predetermined number of lines is determined. If it is stored, the process shifts to S197. If it is not stored, the process shifts to S191. Here, the predetermined number of lines represents the unit of processing in the compression layer so as to determine whether or not data in an amount equivalent to the first four lines of the 8 lines to be transferred in one cycle has been accumulated. This step is carried out by the one-line average data volume/readout data volume calculation unit 37 if the process is implemented by the configuration shown in Fig. 2.

In S197, a predetermined data volume is formed by the following expression:

[An amount of compressed data equivalent to the first predetermined number of lines (i.e., a first predetermined line value: C)] + [EOF] + [stuffed "0"s];

and the process shifts to S198. If this step is implemented by the configuration shown in Fig. 2, the function is added to the invalid data addition unit 38.

In S198, whether or not transfer data is stored in an amount equivalent to the number of lines to be transferred in one cycle (a second predetermined value: D) is determined. If an amount equivalent to the number of lines to be transferred in one cycle is stored, the process shifts to S199. Otherwise, it shifts to S191. Here, it is determined whether or not the data is accumulated in an amount equivalent to the remaining 4 lines of the 8 lines to be transferred in one cycle. If this step is implemented by the configuration shown in Fig. 2, the function is added to the one-line average data volume/readout data volume calculation unit 37.

In S199, a predetermined data volume (i.e., 8 lines) is formed by the following expression:

[An amount of compressed data equivalent to the first predetermined number of lines] + [EOF] + [stuffed "0"s];

and the process shifts to S1910.

In S1910, a packet is generated in compliance with the specification of a transfer path and the generated packet is transferred. This step is carried out by the packet generation unit 39 if the process is implemented by the configuration shown in Fig. 2.

Note that whether or not there is a need to insert a padding is determined after a data volume equivalent to a predetermined number of lines (i.e., the unit of processing of the compression layer) is accumulated in the above described step; an alternative configuration may be one to determine whether or not there is a need to insert a padding for the amount equivalent to one line and then determine whether or not the amount of data equivalent to one line has been stored. Judgment for a padding in this event is carried out by counting for each line with a counter or the like and by a counter value.

Next is a description of the case of carrying out the above described process using the system shown in Fig. 2.

The one-line average data volume/readout data volume calculation unit 37 calculates the timing for inserting the padding (i.e., padding insertion information) shown in S196 and S198. Here, the calculation is performed by a specifically equipped process unit.

When the data is output from the buffer in an amount equivalent to the number of bytes in accordance with the instruction from the access control unit 31, the data is input to the invalid data addition unit 38.

The invalid data addition unit 38 calculates the difference between the average number of bytes per line obtained from the one-line average data volume/readout data volume calculation unit 37 and the number of bytes of the data obtained from the buffer and adds invalid data in an amount equivalent to the calculated difference. In this event, invalid data is inserted into the lines that are instructed to be inserted during the period in which the padding insertion information is "enable", while invalid data is not added if the information is "disable". Then, the invalid data addition unit 38 outputs the generated data to the packet generation unit 39. If a specific process unit is equipped, another signal line is required.

In this event, the invalid data addition unit 38 outputs data (padding) in accordance with the padding insertion position information to the packet generation unit 39. If a specific process unit is equipped, another signal line is required.

The packet generation unit 39 receives, by way of the signal line (6), an input of the information of the number of lines to be transferred in one cycle, which is the information calculated by the one-cycle transfer volume calculation unit 33.

Then, the packet generation unit 39 counts up the number of times of receiving data to which invalid data has been added from the invalid data addition unit 38. When the number of times reaches the number of lines to be transferred in one cycle, the packet generation unit 39 generates substance data by interconnecting the pieces of data for the number of times equivalent to the aforementioned number of lines; and also generates an isochronous packet by adding the substance data and sends out the generated packet to a transmission path.

[Embodiment 11]

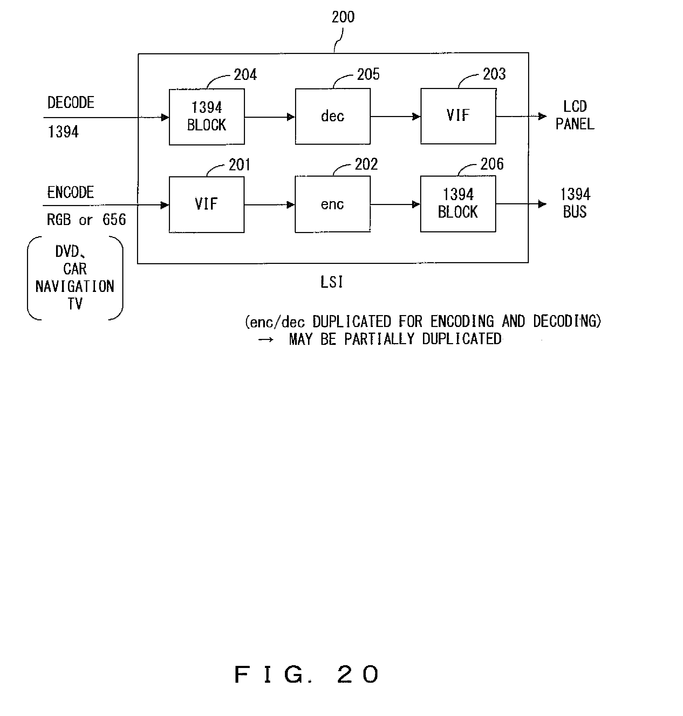

While the above description has been provided for a transmission, the following description is provided for a preferred embodiment 11 relating to a decoding process when the above described packet according to the present invention is received. An LSI 200 shown in Fig. 20 is disposed to carry out the transmission and reception process for image processing and data. The transmission unit receives, by way of the video interface (VIF) unit 201, data transmitted from the image processing devices (such as a DVD player, a car navigation device, and a terrestrial digital media broadcast-use tuner) as described above. The output of the VIF unit 201 is encoded by the encode unit 202, and the result is output by the transfer unit 206 in compliance with, for example, the IEEE 1394 Standard.

The reception unit receives, by way of the reception unit 204, data transmitted in compliance with, for example, the IEEE 1394 Standard, and decodes the result using the decode unit 205. The decoded data is transferred to a display device, such as a liquid crystal display (LCD) panel, by way of the VIF unit 203.

Note that Fig. 20 exemplifies the case of transferring input data to, and output data from, the LSI 200 in accordance with the IEEE 1394 Standard and therefore exemplifies the case of the transfer unit 206 carrying out a block formation (i.e., a packet generation) for use in the IEEE 1394 Standard, while the reception unit 204 receives a block for use in the IEEE 1394 Standard. Naturally, the configuration will be capable of performing the transmission and reception in compliance with another standard when data is to be transferred in compliance with the other standard.

Further, the compression process (which may include an encoding process) performed by the encode unit 202 and the restoring process (which may include a decoding process for cryptography) performed by the decode unit 205 are of course mutually compatible processes.

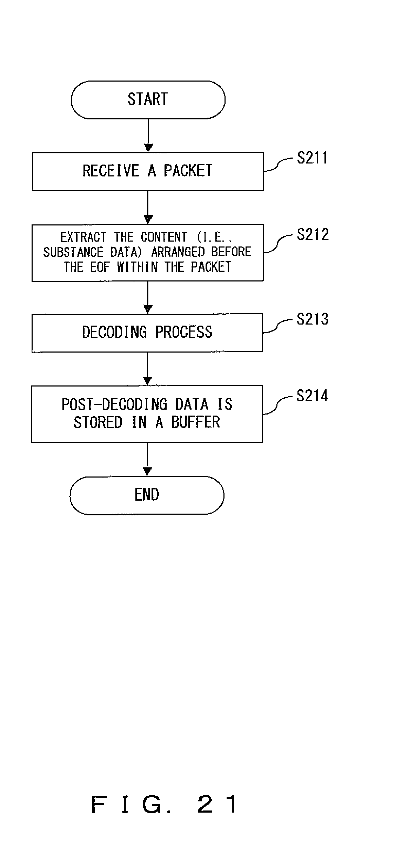

Fig. 21 shows an operation at reception.

In S211, a packet is received.

In S212, substance data arranged before EOF is extracted from the packet constituted, in the above described embodiments, by the data, EOF, and stuffed "0"s.

In S213, a decoding process is applied, and the post-decoding data is stored in a buffer or the like in S214.

Note that each of the above described embodiments is configured to stuff "0"s after the EOF; "0" is arbitrary.

Incidentally, the present invention can also be implemented by generating a control program for making the central processing unit (CPU) of a common computer execute the processes shown in the above described flow charts, recording it in a computer readable recording medium, and having the CPU execute the program that is read to the computer from the recording medium.

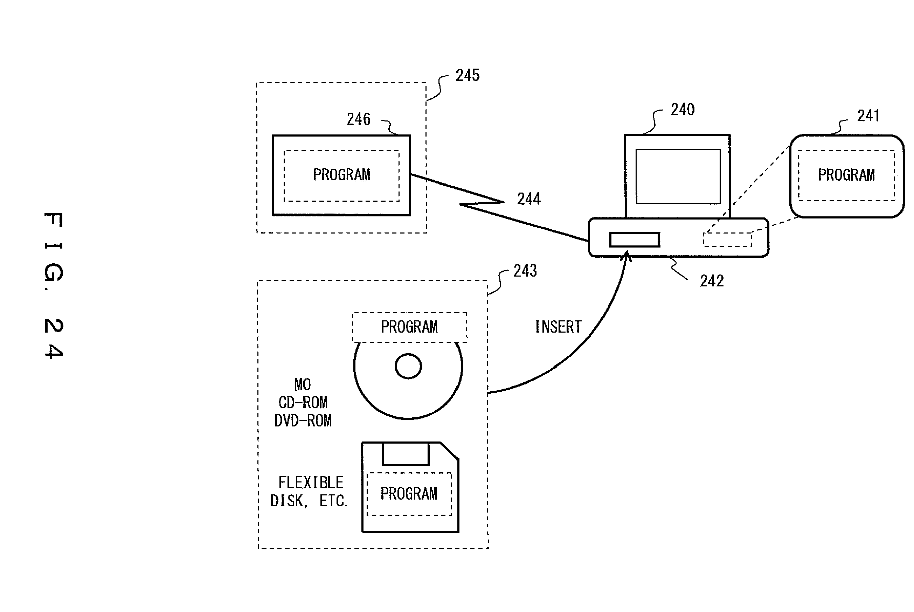

Fig. 24 shows an exemplary configuration of a recording medium allowing a computer to read the recorded control program. Such a recording medium can utilize, for example, a storage device 241 such as read-only memory (ROM) or a hard disk device, which can be comprised by a computer system 240 as a built-in device or as an externally equipped auxiliary device; and a portable recording medium 243 such as a flexible disk, magneto optical (MO) disk, compact disk ROM (CD-ROM), or digital versatile disk ROM (DVD-ROM), which allows readout of the recorded control program by being inserted into a media drive device 242 comprised in the computer system 240.

Further, a recording medium may also be a storage device 246 comprised by a computer system functioning as a program server 245 and which is connected to the computer system 240 by way of a telecommunication line 244. In such a case, the configuration is such that a transmission signal obtained by modulating a carrier wave with a data signal representing a control program is transmitted from the program server 245 to the computer system 240 through the telecommunication line 244 that is a transmission medium, and such that the computer system 240 reproduce the control program by demodulating the received transmission signal, thereby enabling the CPU of the computer system 240 to execute the control program.

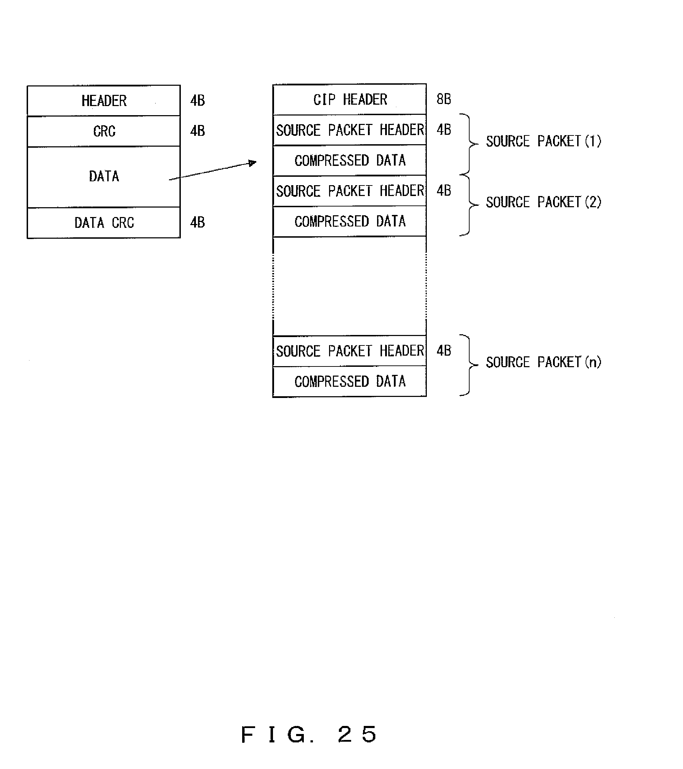

Fig. 25 exemplifies a detailed configuration diagram of an isochronous packet constituted by 4 bytes of a header, 4 bytes of a header CRC, data, and 4 bytes of a data CRC. The data is further compartmentalized as shown on the right side of the figure, in the form of repeating a plurality of source packets, each of which is a combination of a source packet header and compressed data. There is a case in which, for example, only the compressed data part is encrypted. The configuring as such causes the data of an isochronous packet to be rounded to be N times the source packet.

It should be noted that the present invention may be improved and/or modified in various manners possible within the scope of the present invention, in lieu of being limited to the embodiments described above.

**Claims**

1. An image data transfer device transferring image data by compressing it, comprising:

   a one-cycle transfer volume calculation unit for calculating both the number of lines of the image data to be transferred in one cycle and the volume of data corresponding to the aforementioned number of lines on the basis of the category of the image data;
   a buffer unit capable of storing data in an amount that is equivalent to the aforementioned number of lines of the image data processed by a variable length coding;

an invalid data addition unit for calculating the difference between the calculated data volume corresponding to the number of lines and the volume of data stored in the buffer unit, and that also adds invalid data in an amount that is equivalent to the calculated difference; and
a packet generation unit for generating, and transmitting, a packet on the basis of the data to which the invalid data has been added.

2. An image data transfer device transferring image data by compressing it, comprising:

a one-cycle transfer volume calculation unit for calculating the number of lines of the image data to be transferred in one cycle, the number of lines to be changed to a fixed length, and the volume of data corresponding to the aforementioned number of lines to be changed to a fixed length;
a buffer unit capable of storing data in an amount that is equivalent to the number of lines, of the image data processed by a variable length coding, to be changed to a fixed length ;
an invalid data addition unit for calculating the difference between the calculated volume of data corresponding to the number of lines to be changed to a fixed length and the volume of data stored in the buffer unit, and that also adds invalid data in an amount that is equivalent to the calculated difference; and
a packet generation unit for cutting out and transmitting a packet for each cutout data volume from the data to which the invalid data has been added, starting from the head of the data, in an amount of data that is equivalent to the number of lines of the image data to be transferred in one cycle.

3. The image data transfer device according to claim 2, wherein
said number of lines to be changed to a fixed length is no less than the number of lines of said image data to be transferred in said one cycle.

4. The image data transfer device according to claim 1 or 2, further comprising:

a preprocess unit for eliminating redundancy possessed by the image data by applying a preprocessing;
a quantization unit for applying a coarser quantization to the result of the preprocessing;
a coding unit for applying a variable length coding to the data to which the coarser quantization has been applied;
a quantization table generation unit for generating or selecting, on the basis of the result of the preprocessing, a quantization table that is likely to be applicable to image data to be processed; and
a coding table generation unit for generating or selecting, on the basis of the result of the coarser quantization, a coding table that is likely to be applicable to image data to be processed.

5. An image data transfer method for transferring image data by compressing it, comprising:

a one-cycle transfer volume calculation step for calculating both the number of lines of the image data to be transferred in one cycle and the volume of data corresponding to the aforementioned number of lines on the basis of the category of the image data;
a step for storing, in a buffer unit, data in an amount that is equivalent to the aforementioned number of lines of the image data processed by a variable length coding;
an invalid data addition step for calculating the difference between the calculated data volume corresponding to the number of lines and the volume of data stored in the buffer unit, and that also adds invalid data by an amount that is equivalent to the calculated difference; and
a step for generating, and transmitting, a packet on the basis of the data to which the invalid data has been added.

6. An image data transfer method for transferring image data by compressing it, comprising:

a one-cycle transfer volume calculation step for calculating the number of lines of the image data to be transferred in one cycle, the number of lines to be changed to a fixed length, and the volume of data corresponding to the aforementioned number of lines to be changed to a fixed length;
a step for storing, in a buffer unit, data in an amount that is equivalent to the number of lines, of the image data processed by a variable length coding, to be changed to a fixed length ;
an invalid data addition step for calculating the difference between the calculated volume of data corresponding to the number of lines to be changed to a fixed length and the volume of data stored in the buffer unit, and that also adds invalid data in an amount that is equivalent to the calculated difference; and
a step for cutting out a packet generation unit for cutting out and transmitting a packet for each cutout data volume from the data to which the invalid data has been added, starting from the head of the data, in an amount of data that is equivalent to the number of lines of the image data to be transferred in one cycle.

7. The image data transfer method according to claim 6, wherein
said number of lines to be changed to a fixed length is no less than the number of lines of said image data to be transferred in said one cycle.

8. The image data transfer method according to claim 5 or 6, further comprising:

a preprocess step for eliminating redundancy possessed by the image data by applying a preprocessing;
a quantization step for applying a coarser quantization to the result of the preprocessing;
a coding step for applying a variable length coding to the data to which the coarser quantization has been applied;
a quantization table generation step for generating or selecting, on the basis of the result of the preprocessing, a quantization table that is likely to be applicable to image data to be processed; and
a coding table generation step for generating or selecting, on the basis of the result of the coarser quantization, a coding table that is likely to be applicable to image data to be processed.

9. A program for making a central processing unit (CPU) that is comprised by an image data transfer device, which transfers image data by compressing it, wherein
the program makes the computer execute
a one-cycle transfer volume calculation process for calculating both the number of lines of the image data to be transferred in one cycle and the volume of data corresponding to the aforementioned number of lines on the basis of the category of the image data;
a process for storing, in a buffer unit, data in an amount that is equivalent to the aforementioned number of lines of the image data processed by a variable length coding;
an invalid data addition process for calculating the difference between the calculated data volume corresponding to the number of lines and the volume of data stored in the buffer unit, and that also adds invalid data in an amount that is equivalent to the calculated difference; and
a process for generating, and transmitting, a packet on the basis of the data to which the invalid data has been added.

10. A program for making a central processing unit (CPU) that is comprised by an image data transfer device, which transfers image data by compressing it, wherein
the program makes the computer execute
a one-cycle transfer volume calculation process for calculating the number of lines of the image data to be transferred in one cycle, the number of lines to be changed to a fixed length, and the volume of data corresponding to the aforementioned number of lines to be changed to a fixed length;
a process for storing, in a buffer unit, data in an amount that is equivalent to the number of lines, of the image data processed by a variable length coding, to be changed to a fixed length;
an invalid data addition process for calculating the difference between the calculated volume of data corresponding to the number of lines to be changed to a fixed length and the volume of data stored in the buffer unit, and that also adds invalid data in an amount that is equivalent to the calculated difference; and
a process for cutting out a packet generation unit for cutting out and transmitting a packet for each cutout data volume from the data to which the invalid data has been added, starting from the head of the data, in an amount of data that is equivalent to the number of lines of the image data to be transferred in one cycle.

11. A recording medium which allows a computer to read a stored program that is to be executed by the computer comprised by an image data transfer device that transfers image data by compressing it, wherein
the program makes the computer execute
a one-cycle transfer volume calculation process for calculating both the number of lines of the image data to be transferred in one cycle and the volume of data corresponding to the aforementioned number of lines on the basis of the category of the image data;
a process for storing, in a buffer unit, data in an amount that is equivalent to the aforementioned number of lines of the image data processed by a variable length coding;
an invalid data addition process for calculating the difference between the calculated data volume corresponding to the number of lines and the volume of data stored in the buffer unit, and that also adds invalid data in an amount that is equivalent to the calculated difference; and
a process for generating, and transmitting, a packet on the basis of the data to which the invalid data has been added.

12. A recording medium which allows a computer to read a stored program that is to be executed by the computer comprised by an image data transfer device that transfers image data by compressing it, wherein the program makes the computer execute

a one-cycle transfer volume calculation process for calculating the number of lines of the image data to be transferred in one cycle, the number of lines to be changed to a fixed length, and the volume of data corresponding to the aforementioned number of lines to be changed to a fixed length;

a process for storing, in a buffer unit, data in an amount that is equivalent to the number of lines, of the image data processed by a variable length coding, to be changed to a fixed length ;

an invalid data addition process for calculating the difference between the calculated volume of data corresponding to the number of lines to be changed to a fixed length and the volume of data stored in the buffer unit, and that also adds invalid data in an amount that is equivalent to the calculated difference; and

a packet generation unit for cutting out a packet for each cutout data volume from the data to which the invalid data has been added, starting from the head of the data, in an amount of data that is equivalent to the number of lines of the image data to be transferred in one cycle.

**13.** A data transfer device, comprising:

a one-cycle transfer volume calculation unit for calculating both the number of units of processing of input data to be transferred in one cycle and the volume of data corresponding to the aforementioned number of units of processing on the basis of the category of the input data;

a buffer unit capable of storing data in an amount that is equivalent to the aforementioned number of units of processing of the input data;

an invalid data addition unit for calculating the difference between the calculated data volume corresponding to the number of units of processing and the volume of data stored in the buffer unit, and that also adds invalid data in an amount that is equivalent to the calculated difference; and

a packet generation unit for generating, and transmitting, a packet on the basis of the data to which the invalid data has been added.

**14.** The data transfer device according to claim 13, further comprising

a compression process unit for compressing said input data, wherein

said buffer unit stores data in an amount that is equivalent to the number of units of processing, the data being compressed by the compression process unit.

F I G. 1

FIG. 2

F I G. 3

| ITEM NUMBER | HORIZONTAL SIZE | BYTES/ PIXEL | VERTICAL SIZE | TRANSFER RATE | COMPRESSION RATIO | NUMBER OF LINES TRANSFERRED IN ONE CYCLE | NUMBER OF BYTES TRANSFERRED IN ONE CYCLE |
|---|---|---|---|---|---|---|---|
| 1 | 800 | 3 | 480 | 60 | 1/3 | 4 (3.6) | 3200 (2880) |
| 2 | 720 | 2 | 480 | 30 | 1/3 | 2 (1.8) | 960 (864) |
| 3 | 640 | 3 | 480 | 30 | 1/3 | 2 (1.8) | 1280 (1152) |
| 4 | 640 | 2 | 480 | 30 | 1/3 | 2 (1.8) | 854 (768) |
| 5 | 320 | 3 | 240 | 30 | 1/3 | 1 (0.9) | 320 (288) |
| 6 | 320 | 2 | 240 | 30 | 1/3 | 1 (0.9) | 214 (192) |

F I G. 4

| ITEM NUMBER | NUMBER OF LINES TRANSFERRED IN ONE CYCLE | NUMBER OF LINES TO BE MADE A FIXED LENGTH | NUMBER OF BYTES CORRESPONDING TO THE NUMBER OF LINES TO BE MADE A FIXED LENGTH |
|---|---|---|---|
| 1 | 4 | 4 | 3200 |
| 2 | 2 | 8 | 3840 |
| 3 | 2 | 8 | 5120 |
| 4 | 2 | 8 | 3414 |
| 5 | 1 | 8 | 2560 |
| 6 | 1 | 16 | 3414 |

F I G. 5

R COMPONENT-USE CODING TABLE

$P_1$ ⟩ 0
$P_2$ ⟩ 1

⋮

$P_k$ ⟩ 0
1

⋮

$P_l$ ⟩ 1
0

G COMPONENT-USE CODING TABLE

$P_1$ ⟩ 1
$P_2$ ⟩ 0

⋮

$P_m$ ⟩ 1
0

⟩ 1
0

B COMPONENT-USE CODING TABLE

$P_1$ ⟩ 0
$P_2$ ⟩ 1

⋮

$P_n$ ⟩ 1
0

⟩ 1
0

F I G.   6 A

BRIGHTNESS COMPONENT Y-USE CODING TABLE

COLOR COMPONENT U-USE CODING TABLE

COLOR COMPONENT V-USE CODING TABLE

FIG. 6B

F I G. 7

F I G. 8

F I G. 9

720

| 4 LINES |
| 4 LINES |
| 4 LINES |

480

.
.
.
.

F I G.   1 0

EP 2 003 892 A1

| A | B | C | D | EOF | 0000 ··· |

4 LINES

F I G.  1 1

34

F I G. 1 2

FIG. 13

ONE CYCLE

TRANSFER CYCLE

|← 125μs →|← 125μs →|← 125μs →|← 125μs →|← 125μs →| · · · · |← 125μs →|← 125μs →| · · · ·

(a) EMPTY PACKET TRANSFER METHOD (1)

INVALID DATA    INVALID DATA    INVALID DATA    INVALID DATA

EMPTY    EMPTY

DATA                                    EMPTY PACKET

(b) EMPTY PACKET TRANSFER METHOD (2)

EMPTY    EMPTY

3200

TIME

EP 2 003 892 A1

36

START

CALCULATE A TRANSFER
VOLUME IN ONE CYCLE ⟶ S141

NUMBER OF PACKETS (X)
TRANSFERRED IN ONE FRAME ⟶ S142

CALCULATE A FRACTION AND
CALCULATE THE NUMBER OF
EMPTY PACKETS (Y) ⟶ S143

CLEAR THE NUMBER OF TIMES i OF
TRANSFERS ( n = 1 ) AND CLEAR
THE NUMBER OF TIMES n OF
INSERTING EMPTY PACKETS ⟶ S144

INCREMENT i=i+1 AND CARRY
OUT A TRANSFER ⟶ S145

S146

$i = X$ — yes → END

no

S147

$i = (X/Y) n$

no

yes

INSERT AN EMPTY PACKET
n=n+1 ⟶ S148

F I G.   1 4

F I G. 1 5

START

READ ONE LINE OF AN IMAGE ⌐S161 ⎫
                                  |
A PREDICTION VOLUME ⌐S162          |
                                  |
QUANTIZATION ⌐S163                 ⎬ COMPRESSION PROCESS
                                  |  (I.E., CODING VOLUME CONTROL)
CODING ⌐S164                       |
                                  |
WRITE COMPRESSED DATA TO A BUFFER ⌐S165 |
BY THE AMOUNT EQUIVALENT TO ONE          |
LINE ⎭

S166

no ◄── IS THE AMOUNT OF DATA
        EQUIVALENT TO A PREDETERMINED NUMBER
        OF LINES STORED?

yes

S167

IS A PADDING TO ──── no ───►
BE INSERTED?

yes

FORM A PREDETERMINED DATA VOLUME
BY ADDING [COMPRESSED DATA ⌐S168
EQUIVALENT TO A PREDETERMINED
NUMBER OF LINES] + [EOF] +
[STUFFED "0" S]

S169

GENERATE A PACKET

END

F I G.   1 6

START

READ ONE LINE OF AN IMAGE — S171

A PREDICTION VOLUME — S172

QUANTIZATION — S173

CODING — S174

WRITE COMPRESSED DATA TO A BUFFER BY THE AMOUNT EQUIVALENT TO ONE LINE — S175

COMPRESSION PROCESS (I.E., CODING VOLUME CONTROL)

S176

no

IS THE AMOUNT OF DATA EQUIVALENT TO A PREDETERMINED NUMBER OF LINES STORED?

yes

CALCULATE THE VOLUME OF A PADDING (PADDING/N) — S177

BY CALCULATING [COMPRESSED DATA EQUIVALENT TO A PREDETERMINED NUMBER OF LINES FOR PADDING] + [EOF] + [STUFFED "0" S] — S178

GENERATE A PACKET — S179

END

F I G.   1 7

F I G. 1 8

START

READ ONE LINE OF AN IMAGE — S191

A PREDICTION VOLUME — S192

QUANTIZATION — S193

CODING — S194

WRITE COMPRESSED DATA TO A BUFFER — S195

COMPRESSION PROCESS
(I.E., CODING VOLUME CONTROL)

S196
IS THE AMOUNT OF DATA EQUIVALENT TO A PREDETERMINED NUMBER OF LINES STORED?

no

yes

[COMPRESSED DATA EQUIVALENT TO A PREDETERMINED NUMBER OF LINES FOR PADDING] + [EOF] + [STUFFED "0" S] — S197

S198
IS DATA BY THE AMOUNT EQUIVALENT TO THE NUMBER OF LINES TO BE TRANSFERRED IN ONE CYCLE ACCUMULATED?

no

yes

[COMPRESSED DATA EQUIVALENT TO A PREDETERMINED NUMBER OF LINES FOR PADDING] + [EOF] + [STUFFED "0" S] — S199

GENERATE A PACKET — S1910

END

F I G.  1 9

200

| DECODE 1394 → | 204 1394 BLOCK | → | 205 dec | → | 203 VIF | → | LCD PANEL |

| ENCODE RGB or 656 → | 201 VIF | → | 202 enc | → | 206 1394 BLOCK | → | 1394 BUS |

DVD、CAR NAVIGATION TV

LSI

(enc/dec DUPLICATED FOR ENCODING AND DECODING)
→ MAY BE PARTIALLY DUPLICATED

F I G . 2 0

START

RECEIVE A PACKET  ⎯ S211

EXTRACT THE CONTENT (I.E.,
SUBSTANCE DATA) ARRANGED BEFORE
THE EOF WITHIN THE PACKET  ⎯ S212

DECODING PROCESS  ⎯ S213

POST-DECODING DATA IS
STORED IN A BUFFER  ⎯ S214

END

F I G.  2 1

START

THE NUMBER OF LINES OF IMAGE DATA
TO BE TRANSFERRED IN ONE CYCLE
AND A DATA VOLUME CORRESPONDING
TO THE NUMBER OF LINES ARE
CALCULATED ON THE BASIS OF THE
CATEGORY OF IMAGE DATA — S221

AMONG THE IMAGE DATA PROCESSED
BY A VARIABLE LENGTH CODING, A
PIECE(S) OF DATA IN THE AMOUNT
EQUIVALENT TO THE NUMBER OF
LINES IS STORED IN A BUFFER PART — S222

THE DIFFERENCE BETWEEN THE DATA
VOLUME CORRESPONDING TO THE
CALCULATED NUMBER OF LINES AND
THE VOLUME OF THE DATA STORED
IN THE BUFFER PART IS
CALCULATED AND A PIECE OF
INVALID DATA IN THE AMOUNT
EQUIVALENT TO THE CALCULATED
DIFFERENCE IS ADDED TO THE DATA
STORED IN THE BUFFER PART — S223

A PACKET IS GENERATED, AND
TRANSMITTED, ON THE BASIS OF
THE DATA TO WHICH THE INVALID
DATA HAS BEEN ADDED — S224

END

F I G. 2 2

START

THE NUMBER OF LINES OF IMAGE DATA TO BE TRANSFERRED IN ONE CYCLE AND A DATA VOLUME CORRESPONDING TO THE NUMBER OF LINES CORRESPONDING TO THE FIXED LENGTH ARE CALCULATED ON THE BASIS OF THE CATEGORY OF IMAGE DATA — S231

AMONG THE PIECES OF IMAGE DATA PROCESSED BY A VARIABLE LENGTH CODING, A PIECE(S) OF DATA BY THE AMOUNT EQUIVALENT TO THE NUMBER OF LINES TO BE CHANGED TO A FIXED LENGTH IS STORED IN A BUFFER PART — S232

THE DIFFERENCE BETWEEN THE CALCULATED VOLUME OF DATA TO BE CHANGED TO A FIXED LENGTH AND THE VOLUME OF DATA STORED IN THE BUFFER PART IS CALCULATED AND ALSO INVALID DATA BY THE AMOUNT EQUIVALENT TO THE DIFFERENCE IS ADDED TO THE DATA STORED IN THE BUFFER PART — S233

THE DATA TO WHICH INVALID DATA HAS BEEN ADDED IS CUT OUT BY THE VOLUME OF DATA CORRESPONDING TO THE NUMBER OF LINES OF IMAGE DATA TO BE TRANSFERRED IN ONE CYCLE STARTING FROM THE HEAD; A PACKET IS GENERATED FOR EACH OF THE CUTOUT DATA VOLUME; AND THE GENERATED PACKET IS TRANSMITTED — S234

END

F I G. 2 3

F I G.  2 4

| | |
|---|---|
| HEADER | 4B |
| CRC | 4B |
| DATA | |
| DATA CRC | 4B |

| | | |
|---|---|---|
| CIP HEADER | 8B | |
| SOURCE PACKET HEADER | 4B | SOURCE PACKET (1) |
| COMPRESSED DATA | | |
| SOURCE PACKET HEADER | 4B | SOURCE PACKET (2) |
| COMPRESSED DATA | | |
| | | |
| SOURCE PACKET HEADER | 4B | SOURCE PACKET (n) |
| COMPRESSED DATA | | |

F I G.  2 5

| INTERNATIONAL SEARCH REPORT | International application No. |
|---|---|
| | PCT/JP2006/315053 |

**A. CLASSIFICATION OF SUBJECT MATTER**
*H04N7/173*(2006.01)i

According to International Patent Classification (IPC) or to both national classification and IPC

**B. FIELDS SEARCHED**

Minimum documentation searched (classification system followed by classification symbols)
H04N7/173

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-61877 A (Sumitomo Electric Industries, Ltd.), 26 February, 2004 (26.02.04), Par. No. [0025] (Family: none) | 1-14 |
| A | JP 11-167630 A (Canon Inc.), 22 June, 1999 (22.06.99), Par. Nos. [0006], [0028] (Family: none) | 1-14 |
| A | JP 2004-207891 A (Matsushita Electric Industrial Co., Ltd.), 22 July, 2004 (22.07.04), Par. No. [0014] & US 2005/0041606 A1 | 1-14 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 October, 2006 (24.10.06) | 31 October, 2006 (31.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

**Patent documents cited in the description**

- JP 2001028753 A
- JP 2001238215 A